# EUROPEAN PATENT APPLICATION

(11) **EP 4 545 291 A1**
(43) Date of publication of application: **30.04.2025**
(21) Application number: 23843223.1
(22) Date of filing: 05.07.2023
(51) Int. Cl.: B32B 7/023, G02B 5/30, C09J 7/29

(54) **LOUVER FILM AND DEVICE**

(30) Priority: 21.07.2022 JP 2022116157
(71) Applicant: Samsung Electronics Co., Ltd., Suwon-si, Gyeonggi-do 16677 (KR)
(72) Inventor: TAKAHASHI, Toshiyuki, Yokohama-shi, Kanagawa 230-0027 (JP); SATO, Atsushi, Yokohama-shi, Kanagawa 230-0027 (JP); JEONG, Injo, Suwon-si Gyeonggi-do 16677 (KR); LEE, Jeahyuck, Suwon-si Gyeonggi-do 16677 (KR); YOON, Jongseok, Suwon-si Gyeonggi-do 16677 (KR); YOKOTE, Yoshihiro, Yokohama-shi, Kanagawa 230-0027 (JP)
(74) Representative: Appleyard Lees IP LLP
(86) International application number: PCT/KR2023/009466
(87) International publication number: WO 2024/019372

(57) **Abstract**

The present invention relates to a louver film, having a wound structure, that adjusts, to a desired angle, a viewing angle in a specific direction from among viewing angles in all directions. The present invention comprises a louver part (30) having a wound structure in which a stack comprising a light-transmitting layer, a light-blocking layer and an adhesive layer is wound, wherein the louver part (30) comprises a light-transmitting part formed of at least the light-transmitting layer, and a light-blocking part formed of at least the light-blocking layer, and a refractive index of the light-blocking layer and/or the adhesive layer differs from a refractive index of the light-transmitting layer.

## Description

### [Technical Field]

The present invention relates to a louver film and a device including the film.

### [Background Art]

There are known louver films that control the angular range of transmitted light for the purpose of imparting an anti-peep function and an anti-reflection function, an outdoor visibility enhancement function, etc. to a display device. The louver film includes, e.g., a light transmitting portion capable of transmitting light and a light blocking portion capable of absorbing and/or reflecting light alternately disposed on a film surface, as disclosed in Patent Document 1.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Problem]

As disclosed in Patent Document 1, a general louver film may be manufactured not only by a method of forming grooves in light transmitting portions and forming light blocking portions in the grooves, but also by a method of forming a stack by alternately stacking light transmitting layers and light blocking layers and cutting the stack in the stacking direction, a method of cutting a stack of circular or polygonal films in which grooves are formed in light transmitting portions and light blocking portions are formed in the grooves, along the outer circumference of the stacking direction of the stack.

However, the louver film manufactured as described above may only control the traveling direction of light transmitted only in one direction at a predetermined angle. Since it is assumed that a smart device (e.g., a smartphone, a smart watch, a tablet terminal, a wearable terminal, etc.) including a louver film is used in a plurality of directions, there is a problem that a desired effect may not be sufficiently obtained unless the traveling direction of transmitted light is controlled at a predetermined angle with respect to a plurality of directions crossing the front surface.

To address the problems, the present invention may provide a louver film capable of controlling the viewing angle in all directions and including a louver portion having a wound structure in which a stack including a light transmitting layer and a light blocking layer is wound.

Meanwhile, as a method of controlling the viewing angle of the louver film including the louver portion having the wound structure, a method of changing the thickness (a pitch width between layers) of the light transmitting layer or the light blocking layer may be considered. However, according to this method, the viewing angle may be controlled symmetrically to the left and right due to the structure of the louver film, but it may be difficult to make the viewing angle asymmetrical to the left and right or to partially change the viewing angle.

The present invention may implement a function of controlling the viewing angle in a specific direction of a louver film having a wound structure by appropriately controlling the refractive index of each layer constituting the louver portion.

As achieved considering the foregoing problems, the present invention aims to provide a louver film having a wound structure, which may adjust the viewing angle from a specific direction among viewing angles in all directions to a desired angle, and a device having the film.

The disclosure is not limited to the foregoing embodiments but various modifications or changes may rather be made thereto without departing from the spirit and scope of the disclosure.

### [Technical Solution]

A louver film according to the present embodiment comprises a louver portion having a wound structure in a state in which a stack including a light transmitting layer, a light blocking layer, and an adhesive layer is wound. The louver portion includes a light transmitting portion formed of, at least, the light transmitting layer and a light blocking portion formed of, at least, the light blocking layer. A at least one of a refractive index of the light blocking layer or a refractive index of the adhesive layer is different from a refractive index of the light transmitting layer.
is different from a refractive index of the light transmitting layer.

A device according to the present embodiment is configured to include the louver film in a portion thereof.

### [Advantageous Effects]

According to the present invention, in a louver film having a wound structure, it is possible to adjust the viewing angle from a specific direction among the viewing angles in all directions to a desired angle.

The effects that may be obtained from this disclosure are not limited to the effects mentioned above, and various effects that may be directly or indirectly identified through the disclosure may be provided.

### [Brief Description of the Drawings]

FIG. 1 is a schematic plan view of a louver film according to a preferred embodiment of the present invention;
FIG. 2 is a schematic cross-sectional view taken along line A-A of FIG. 1;
FIG. 3A is a schematic cross-sectional view of a stack serving as a louver portion of a louver film according to a preferred embodiment of the present invention;
FIG. 3B is a schematic perspective view of a wound body serving as a louver film according to a preferred embodiment of the present invention;
FIG. 4 is a conceptual view illustrating a flow of a major process included in a method for manufacturing a louver film according to a preferred embodiment of the present invention;
FIG. 5A is a conceptual view illustrating a trajectory of incident light when refractive indices of a light transmitting layer, a light blocking layer, and an adhesive layer constituting a louver portion are the same;
FIG. 5B is a conceptual view illustrating a trajectory of incident light when the refractive index of an adhesive layer is smaller than those of a light transmitting layer and a light blocking layer constituting a louver portion as the refractive indices of light transmitting layer and a light blocking layer are the same;
FIG. 6 is a schematic view illustrating a measurement position of a thickness of a louver portion included in a louver film according to an embodiment of the present invention;
FIG. 7 is a schematic diagram illustrating a measurement position of the overall light transmittance of a louver portion included in a louver film according to an embodiment of the present invention;
FIG. 8 is a schematic diagram illustrating a measurement position of an angle and transmittance of transmitted light for a louver film according to an embodiment of the present invention; and
FIG. 9 is a schematic view illustrating a measurement position of an angle and transmittance of transmitted light for a louver film according to an embodiment of the present invention.

### [Mode for Carrying out the Invention]

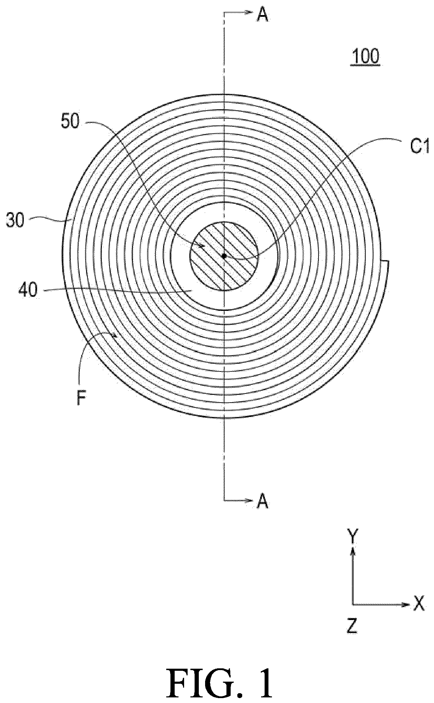

Hereinafter, embodiments of the present invention are described with reference to the accompanying drawings as necessary. Further, in the description of the drawings, the same symbols are assigned to identical elements, and duplicate descriptions are omitted. Further, the dimension ratios in the drawings may be exaggerated for convenience of description or may differ from the actual ratios. Further, in FIG. 1, the left-right direction is defined as an X direction, the upper-lower direction is defined as a Y direction, and the direction perpendicular to the ground is defined as a Z direction.

The following description taken in conjunction with the accompanying drawings may be presented to provide a comprehensive understanding of various implementations of the disclosure as defined by the claims and equivalents thereto. The specific embodiments disclosed in the following description entail various specific details to aid understanding, but are regarded as one of various embodiments. Accordingly, it is apparent to those skilled in the art to which the present invention pertains that various changes and modifications may be made to the various implementations described in the disclosure without departing from the technical spirit of the present invention. Further, descriptions of well-known functions and configurations may be omitted for clarity and brevity. The singular forms "a," "an," and "the" are intended to include the plural forms as well, unless the context clearly indicates otherwise. Thus, as an example, "a component surface" may be interpreted as including one or more of the surfaces of a component.

Further, unless otherwise specified, operations and physical properties are measured under the conditions of room temperature (20°C or higher and 25°C or lower)/relative humidity of 40% RH or higher and 50% RH or lower.

An embodiment of the present invention relates to a louver film including a louver portion having a wound structure in a state in which a stack including a light transmitting layer, a light blocking layer, and an adhesive layer is wound, in which the louver portion includes a light transmitting portion constituted of, at least, the light transmitting layer, and a light blocking portion constituted of, at least, the light blocking layer, and the refractive index of at least one of the light blocking layer and the adhesive layer is different from the refractive index of the light transmitting layer.

In the disclosure, the "wound structure in a state in which a stack including a light transmitting layer, a light blocking layer, and an adhesive layer is wound" represents a structure that may be obtained when it is considered that the stack including at least, the light transmitting layer, light blocking layer, and adhesive layer is wound. In the disclosure, the same also applies to the structure shown as an example of the above-described wound structure. For example, when at least a portion of the light transmitting layer exists in the state of a layered member before treatment (e.g., curing treatment) for forming the layer before winding, the wound structure may be formed as at least a portion of the light transmitting layer is formed via such treatment after, or simultaneously with, winding. For example, when at least a portion of the light blocking layer adhesive layer exists in the state of a layered member before treatment (e.g., curing treatment) for forming the layer before winding, the wound structure may be formed as at least a portion of the light blocking layer is formed via such treatment after, or simultaneously with, winding. For example, when at least a portion of the adhesive layer exists in the state of a layered member before treatment (e.g., curing treatment) for forming the layer before winding, the wound structure may be formed as at least a portion of the adhesive layer is formed via such treatment after, or simultaneously with, winding.

Further, e.g., the timing of stacking for forming the stack including the light transmitting layer, the light blocking layer, and the adhesive layer is not particularly limited, and the stacked structure with a material layer for the light transmitting layer or a material layer for the light blocking layer used to construct these layers, which is described below, may be formed before or simultaneously with winding.

### [Configuration of louver film]

The configuration of the louver film 100 according to an embodiment of the present invention is described with appropriate reference to FIGS. 1 to 3B. However, FIGS. 1 to 3B relate to a louver film 100 according to an embodiment of the present invention, and the louver film 100 according to an embodiment of the present invention is not limited to the configuration described by the drawings.

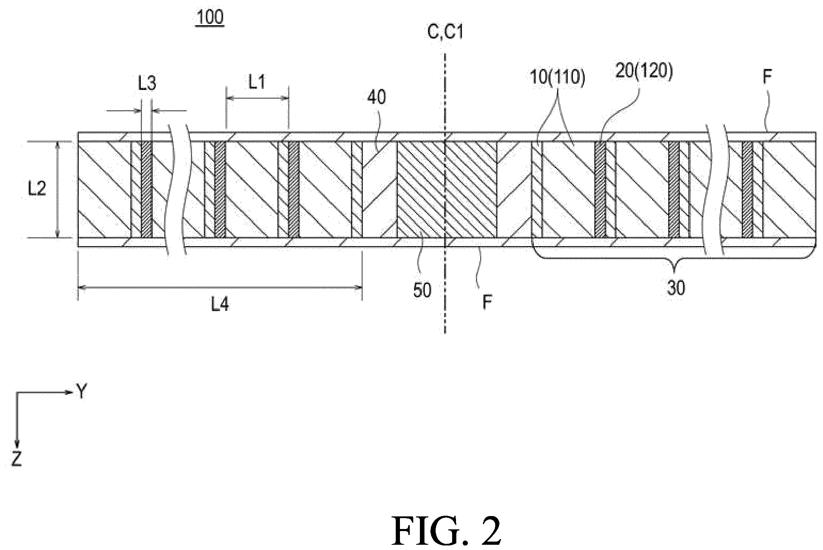

FIG. 1 is a schematic plan view of a louver film 100 according to a preferred embodiment of the present invention, and FIG. 2 is a schematic cross-sectional view taken along line A-A shown in FIG. 1.

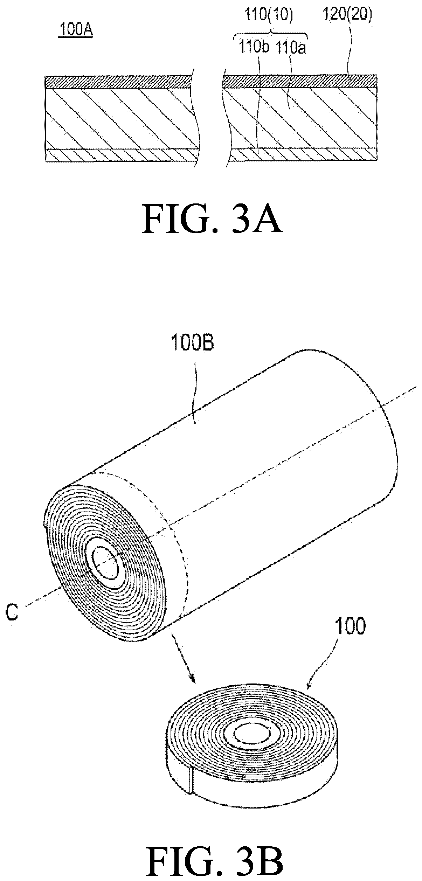

As illustrated in FIG. 1 or 2, the louver film 100 includes a louver portion 30 having a wound structure in a state in which a stack 100A including a light transmitting layer constituting a light transmitting portion 10, a light blocking layer constituting a light blocking portion 20, and an adhesive layer capable of functioning as the light transmitting portion 10 or the light blocking portion 20 is wound. In the wound structure, the stack (e.g., the stack 100A of FIG. 3A) in the wound state is not particularly limited as long as it is a stack including a light transmitting layer, a light blocking layer, and an adhesive layer, but it is preferable that the stack is a stack in which a light transmitting layer, a light blocking layer, and an adhesive layer are stacked.

The louver portion 30 of the louver film 100 includes a light transmitting portion 10 and a light blocking portion 20. It is preferable that the louver portion 30 is formed of a light transmitting portion 10 and a light blocking portion 20. A preferred embodiment of the present invention may include, e.g., a louver film including a light transmitting layer, a light blocking layer, and a louver portion 30 having a wound structure in which a stack (e.g., the stack 100A of FIG. 3A) in which an adhesive layer is stacked is wound, and the louver portion 30 includes a light transmitting portion 10 including at least a light transmitting layer and a light blocking portion 20 including at least a light blocking layer.

In FIGS. 1 and 2, the louver film 100 may selectively include a core material 40, and when the louver film 100 includes a hollow core material 40, the louver film 100 may include a hole portion 50 of the hollow core material 40. The louver film 100 may optionally include a functional layer F. FIG. 2 illustrates a case in which the light transmitting portion 10 is formed of two layers (a light transmitting layer and an adhesive layer having light transmittance), and the light blocking portion 20 is formed of one layer. However, in the louver film 100, the number of layers constituting the light transmitting portion 10 and the light blocking portion 20 is not particularly limited. Each of the light transmitting unit 10 and the light blocking unit 20 may be formed of one or two or more layers. Further, in the louver film 100, the light transmitting portion 10 may be formed of one layer (light transmitting layer), and the light blocking portion 20 may be formed of two layers (light blocking layer and adhesive layer having a light blocking property).

The "wound structure in a state in which a stack including a light transmitting layer, a light blocking layer, and an adhesive layer is wound" may be a structure in a state in which a stack 100A including a light transmitting layer having light transmittance and a light blocking layer having a light blocking property is wound along a winding axis C which serves as the winding center C1. The wound structure may be, e.g., a structure in which only the stack 100A including the light transmitting layer, the light blocking layer, and the adhesive layer is wound with the winding axis C as the winding center C1, or a structure in which the stack 100A including the light transmitting layer, the light blocking layer, and the adhesive layer is wound around the core material 40 with the winding axis C matching the axial direction of the core material 40 as the winding center C1. The wound structure may include, e.g., a wound structure in a state in which the one long stack 100A including a light transmitting layer, a light blocking layer, and an adhesive layer is wound to overlap in a roll shape. The wound structure shown in FIGS. 1 and 2 is an example of the wound structure when the core material 40 is used. Further, the wound structure may be in a state in which a stack 100A including a plurality of light transmitting layers, light blocking layers, and adhesive layers is wound so that the light transmitting layers, the light blocking layers, and the adhesive layers are alternately arranged in a concentric circle. The cross-sectional shape of the stack 100A in the length direction is not particularly limited, but it is preferable to have a surface shape (a smooth plane) perpendicular to the length direction.

The louver portion 30 may further include other portions in addition to the light transmitting portion 10 and the light blocking portion 20, but it is preferable that the louver portion 30 is formed of only the light transmitting portion 10 and the light blocking portion 20. The louver film 100 may be formed of only the louver portion 30, or may further include other components (e.g., a core material 40 to be described below, or a functional layer F, a substrate, etc. that the louver film 100 to be described below may have) in addition to the louver portion 30.

The louver film 100 may further include another louver portion having a structure other than the louver portion 30. The louver film 100 may include the louver portion 30 to form a portion of a louver portion larger than the louver portion 30. However, it is preferable that the louver film 100 has only the louver portion 30 as a louver portion.

FIG. 3A is a schematic cross-sectional view of a stack 100A serving as a louver portion 30 of a louver film 100 according to a preferred embodiment of the present invention, and FIG. 3B is a schematic perspective view of a wound body 100B serving as a louver film 100 according to a preferred embodiment of the present invention.

Although the manufacturing method of the louver film 100 is not particularly limited, it is preferable to manufacture the louver film 100 by a method including preparing a stack 100A of, at least, a material layer 110 for a light transmitting layer and a material layer 120 for a light blocking layer, e.g., as illustrated in FIG. 3A, preparing a wound body 100B by winding the manufactured stack 100A with the winding axis C as the winding center C1 as illustrated in FIG. 3B, and cutting the wound body 100B to a predetermined thickness in a direction crossing the winding axis direction. From this, an embodiment of the present invention may include a method for manufacturing a louver film 100 including a louver portion 30 including a light transmitting portion 10 and a light blocking portion 20, via a winding process of manufacturing a wound body 100B by winding a stack 100A including a material layer 110 of a light transmitting layer for forming a light transmitting portion 10 (a light transmitting layer, an adhesive layer having a light transmitting property) and a material layer 120 for a light blocking layer for forming a light blocking portion 20 (a light blocking layer) and a cutting process of forming the louver portion 30 by cutting the wound body 100B in a direction crossing a winding axis direction of the wound body 100B. Further, an embodiment of the present invention may include a method for manufacturing a louver film 100 including a louver portion 30 including a light transmitting portion 10 and a light blocking portion 20, via a winding process of manufacturing a wound body 100B by winding a stack 100A including a material layer 110 of a light transmitting layer for forming a light transmitting portion 10 (a light transmitting layer) and a material layer 120 for a light blocking layer for forming a light blocking portion 20 (a light blocking layer, an adhesive layer having a light blocking property) and a cutting process of forming the louver portion 30 by cutting the wound body 100B in a direction crossing a winding axis direction of the wound body 100B.

Further, the "winding axis" is a virtual axis which serves as the winding center C1, and the "winding axis direction" (direction of winding axis) matches the axial direction of the wound body 100B. For example, as illustrated in FIG. 3B, the winding axis C is a virtual axis which serves as the winding center C1 of the wound body 100B, and the direction of the winding axis C matches the axial direction of the wound body 100B. The wound body 100B shown in FIG. 3B is one obtained by winding the stack 100A in several overlapping layers to turn around the winding axis C with the winding axis C as the winding center C1.

The stack 100A shown in FIG. 3A includes a light transmitting layer film 110a functioning as a light transmitting layer constituting the light transmitting layer material layer 110 and a light transmitting layer functional layer 110b functioning as an adhesive layer constituting the light transmitting layer material layer 110. FIG. 3A illustrates a case in which the light transmitting layer material layer 110 is formed of two layered members (light transmitting layer film 110a and light transmitting layer functional layer 110b), and the light blocking layer material layer 120 is formed of one layered member. However, in the stack 100A, the number of the layered members constituting the light transmitting layer material layer 110 and the light blocking layer material layer 120 is not particularly limited. The light transmitting layer material layer 110 and the light blocking layer material layer 120 each may be formed of one or two or more layered members.

The light transmitting layer material layer 110 is a layered member used to form a light transmitting layer constituting a light transmitting portion 10 in the louver portion 30 of the louver film 100. The light transmitting layer material layer 110, as it is, may be used as the light transmitting layer, or may undergo treatment for forming the light transmitting layer to be the light transmitting layer. For example, when at least a portion of the light transmitting layer material layer 110 is a pre-curing layered member having curability, a light transmitting layer of the wound structure may be formed via curing treatment simultaneously with, or after, winding. Accordingly, the light transmitting portion 10 constituting the louver portion 30 is denoted as light transmitting layer material layer 110 in parentheses in FIG. 2, and the light transmitting layer material layer 110 is denoted as light transmitting portion 10 in parentheses in FIG. 3A.

The light blocking layer material layer 120 is a layered member used to form a light blocking layer constituting the light blocking portion 20 in the louver portion 30 of the louver film 100. The light blocking layer material layer 120, as it is, may be used as the light blocking layer, or may undergo treatment for forming the light blocking layer to be the light blocking layer. For example, when at least a portion of the light blocking layer material layer 120 is a pre-curing layered member having curability, a light blocking layer of the wound structure may be formed via curing treatment simultaneously with, or after, winding. Accordingly, the light blocking portion 20 constituting the louver portion 30 is denoted as light blocking layer material layer 120 in parentheses in FIG. 2, and the light blocking layer material layer 120 is denoted as light blocking portion 20 in parentheses in FIG. 3A.

The light transmitting layer material layer 110 and the light blocking layer material layer 120 constituting the stack 100A and other members used as necessary, may be stacked simultaneously with winding of each member or may be previously stacked before winding.

The light transmitting layer material layer 110 and the light blocking layer material layer 120 constituting the stack 100A may be formed of a plurality of members with a predetermined length, or formed of one long member, or may be a component having one long shape formed by preparing a plurality of members with a predetermined length and brining their adjacent cross sections in contact with each other. The cross-sectional shape of the long stack 100A in the length direction is not particularly limited, but it is preferable to have a surface shape (a smooth plane) perpendicular to the length direction.

In the wound structure, the light transmitting layer, the light blocking layer, and the adhesive layer may be stacked with their respective portions overlapping each other, or with them overlapping in their entireties. In the stack 100A, the light transmitting layer material layer 110 and the light blocking layer material layer 120 may be stacked with their respective portions overlapping each other, or the light transmitting layer, the light blocking layer, and the adhesive layer may be stacked with them overlapping in their entireties.

The wound structure of the louver film 100 manufactured may be a structure obtained by winding only the stack 100A with the winding axis C as the winding center C1 when winding the stack 100A. The wound structure of the louver film 100 may be, e.g., a structure obtained by using the core material 40 and winding the stack 100A on the core material 40 with the winding axis C matching the axial direction of the core material 40 as the winding center C1.

In an embodiment of the present invention, the louver film 100 includes a louver portion 30 having a wound structure in a state in which a stack 100A including a light transmitting layer, a light blocking layer, and an adhesive layer is wound, and the louver portion 30 includes a light transmitting portion 10 formed of, at least, the light transmitting layer and a light blocking portion 20 formed of, at least, the light blocking layer. In this case, the adhesive layer may function as the light transmitting portion 10 or the light blocking portion 20, or a portion (intervening portion) exhibiting other actions than the light transmitting portion 10 or the light blocking portion 20. Accordingly, the louver film 100 includes a portion in which the light transmitting portion 10 and the light blocking portion 20 are alternately disposed along a direction of the louver portion 30 (hereinafter, "radiation direction") toward the outer circumference from the winding center C1 at plan view (plane viewed in the thickness direction). Further, "alternately disposed" may indicate that another portion may or may not intervene between the light transmitting portion 10 and the light blocking portion 20 disposed along the radiation direction. Among them, it is preferable that in the louver portion 30 of the louver film 100, the light transmitting portion 10 and the light blocking portion 20 are alternately disposed with no other portion present between the light transmitting portion 10 and the light blocking portion 20.

The inventors of the present invention estimate a mechanism for addressing the problems by the above-described configuration, as follows. Although in the louver portion 30 of the louver film 100, a plurality of radiation directions are of interest, the light transmitting portion 10 and the light blocking portion 20 are alternately disposed in the radiation direction of interest. Accordingly, the louver film 100 may control the angular range of the light transmitted through the film surface (upper surface) or opposite surface (lower surface). Thus, the louver film 100 may secure a control characteristic of the angle of the light transmitted in a plurality of directions crossing the front surface. For example, as illustrated in FIG. 1, in the louver film 100 according to a preferred embodiment of the present invention, whatever radiation direction is of interest, the light transmitting portion 10 and the light blocking portion 20 are alternately disposed in the radiation direction of interest. Accordingly, the louver film 100 may control the angular range of the light transmitted through the film surface (upper surface) or opposite surface (lower surface). Thus, the louver film 100 may secure a control characteristic of the angle of the light transmitted in whatever directions crossing the front surface. Further, the above-described mechanism is based solely on speculation, and whether it is correct or wrong does not affect the technical scope of the present invention.

As such, according to an embodiment of the present invention, there may be provided a means capable of realizing a good light transmittance and controlling an angular range of transmitted light for a plurality of directions crossing the front surface (preferably, for multiple directions, more particularly, for all directions).

The louver film 100 according to an embodiment of the present invention may include a louver portion 30 having a wound structure in a state in which a stack 100A including a light transmitting layer, a light blocking layer, and an adhesive layer is wound, and the louver portion 30 includes a light transmitting portion 10 formed of, at least, the light transmitting layer and a light blocking portion 20 formed of, at least, the light blocking layer. To perform desired viewing angle control, the refractive index of at least one of the light blocking layer and the adhesive layer may be configured to differ from the refractive index of the light transmitting layer. In other words, the louver film 100 may control the viewing angle in a specific direction to a desired viewing angle depending on the size relationship between the refractive indices of the light transmitting layer, light blocking layer, and adhesive layer constituting the light transmitting portion 10 or the light blocking portion 20.

In the louver film 100, the refractive index of at least one of the light blocking layer and the adhesive layer may differ from the refractive index of the light transmitting layer. In other words, the louver film 100 has a configuration in which the refractive indices of the three layers, i.e., the light transmitting layer, the light blocking layer, and the adhesive layer, are substantially not the same. Further, the adhesive layer ma have a light transmitting property or may have a light blocking property.

Additionally, in the disclosure including the claims, "almost identical" or "identical or similar" includes "completely identical" and "substantially identical", and "substantially identical" means a difference in refractive index of ± 0.02 between those compared with each other. Therefore, "almost identical" or "identical or similar" may be said to indicate not only a strictly identical state, but also a state in which there is a difference to the extent that tolerance or the same function may be obtained.

The louver film 100 may be configured to have a size relationship in refractive index as follows. Further, the louver film 100 is not limited to the following type as long as it has a configuration in which the refractive index of at least one of the light blocking layer and the adhesive layer differs from the refractive index of the light transmitting layer. For example, the louver film 100 may render the adhesive layer to have a light transmitting property or a light blocking property, may be rendered as a component belonging to the light transmitting portion 10 or the light blocking portion 20, or may be present as a portion (intervening portion) having other functions which does not belong to the light transmitting portion 10 or the light blocking portion 20.

The louver film 100 may be manufactured by controlling the refractive index of each layer so that the refractive indices decrease in the order of the light transmitting layer, the light blocking layer, and the adhesive layer (i.e., the relationship in refractive index: light transmitting layer > light blocking layer > adhesive layer). As shown in FIG. 2, in a case where the adhesive layer is disposed on the inner circumference side of the light transmitting layer, and the light blocking layer is disposed on the outer circumference side of the light transmitting layer, the respective refractive indices of the light transmitting layer, the light blocking layer, and the adhesive layer have the above-described relationship, so that the louver film 100 may totally reflect the light (incident light) incident on the louver film 100 at the interface between the light transmitting layer and the light blocking layer and the interface between the light transmitting layer and the adhesive layer.

The louver film 100 may be manufactured by controlling the refractive index of each layer so that the refractive indices decrease in the order of the light transmitting layer, the adhesive layer, and the light blocking layer (i.e., the relationship in refractive index: light transmitting layer > adhesive layer > light blocking layer). As shown in FIG. 2, in a case where the adhesive layer is disposed on the inner circumference side of the light transmitting layer, and the light blocking layer is disposed on the outer circumference side of the light transmitting layer, the respective refractive indices of the light transmitting layer, the light blocking layer, and the adhesive layer have the above-described relationship, so that the louver film 100 may totally reflect the light (incident light) incident on the louver film 100 at the interface between the light transmitting layer and the light blocking layer and the interface between the light transmitting layer and the adhesive layer.

The louver film 100 may be manufactured by allowing the adhesive layer to have a light transmitting property, making the refractive indices of the light blocking layer and the adhesive layer substantially identical, and controlling the refractive index of each layer so that the refractive indices are larger than the refractive index of the light transmitting layer (i.e., relationship in refractive index: light blocking layer ≒ adhesive layer > light transmitting layer). As shown in FIG. 2, in a case where the adhesive layer is disposed on the inner circumference side of the light transmitting layer, and the light blocking layer is disposed on the outer circumference side of the light transmitting layer, the respective refractive indices of the light transmitting layer, the light blocking layer, and the adhesive layer have the above-described relationship, so that the louver film 100 may totally reflect the light (incident light) incident on the louver film 100 at the interface between the light transmitting layer and the light blocking layer and the interface between the light transmitting layer and the adhesive layer.

Further, the louver film 100 may be manufactured by allowing the adhesive layer to have a light transmitting property, making the refractive indices of the light blocking layer and the adhesive layer substantially identical, and controlling the refractive index of each layer so that the refractive indices are smaller than the refractive index of the light transmitting layer (i.e., relationship in refractive index: light blocking layer ≒ adhesive layer < light transmitting layer). As shown in FIG. 2, in a case where the adhesive layer is disposed adjacent to the inner circumference side of the light transmitting layer, and the light blocking layer is disposed adjacent to the outer circumference side of the light transmitting layer, the respective refractive indices of the light transmitting layer, the light blocking layer, and the adhesive layer have the above-described relationship, so that the louver film 100 may totally reflect the light incident on the louver film 100 at the interface between the light transmitting layer and the light blocking layer and the interface between the light transmitting layer and the adhesive layer.

Further, the louver film 100 may be manufactured by making the refractive indices of the light transmitting layer and the light blocking layer substantially identical, and controlling the refractive index of each layer so that the refractive indices are larger than the refractive index of the adhesive layer (i.e., relationship in refractive index: light transmitting layer ≒ light blocking layer > adhesive layer). As shown in FIG. 2, in a case where the adhesive layer is disposed adjacent to the inner circumference side of the light transmitting layer, and the light blocking layer is disposed adjacent to the outer circumference side of the light transmitting layer, the respective refractive indices of the light transmitting layer, the light blocking layer, and the adhesive layer have the above-described relationship, so that the louver film 100 does not totally reflect the light incident on the louver film 100 at the interface between the light transmitting layer and the light blocking layer but may totally reflect the incident light at the interface between the light transmitting layer and the adhesive layer.

Further, the louver film 100 may be manufactured by allowing the adhesive layer to have a light transmitting property, making the refractive indices of the light transmitting layer and the light blocking layer substantially identical, and controlling the refractive index of each layer so that the refractive indices are smaller than the refractive index of the adhesive layer (i.e., relationship in refractive index: light transmitting layer ≒ light blocking layer < adhesive layer). As shown in FIG. 2, in a case where the adhesive layer is disposed adjacent to the inner circumference side of the light transmitting layer, and the light blocking layer is disposed adjacent to the outer circumference side of the light transmitting layer, the respective refractive indices of the light transmitting layer, the light blocking layer, and the adhesive layer have the above-described relationship, so that the louver film 100 does not totally reflect the light incident on the louver film 100 at the interface between the light transmitting layer and the light blocking layer but may totally reflect the incident light at the interface between the light transmitting layer and the adhesive layer.

Here, in the louver film 100, the refractive indices of the light transmitting layer, light blocking layer, and adhesive layer may be arbitrarily set so that the refractive index of at least one of the light blocking layer and the adhesive layer differs from the refractive index of the light transmitting layer in a range of 1.4 or more to 1.7 or less. Further, for the difference in refractive index of each layer, it is preferable that the difference in refractive index between two compared layers is 0.05 or more, more preferably 0.1 or more, so that at least a portion of the light incident on the louver film 100 is totally reflected.

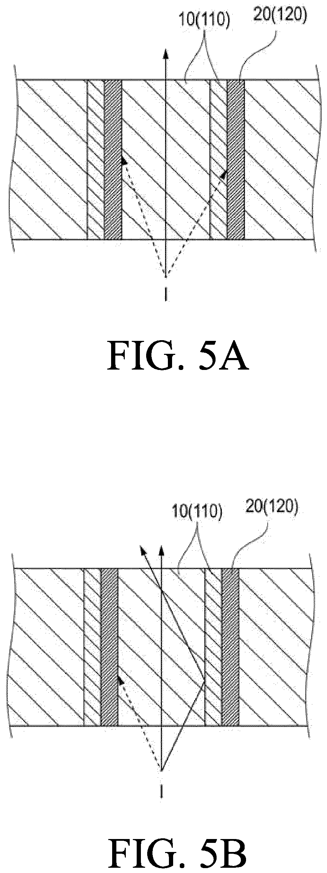

FIGS. 5A and 5B are views schematically illustrating a state of incident light by a difference in refractive index between a light transmitting layer, a light blocking layer, and an adhesive layer constituting a louver film including a louver portion having a wound structure. The solid arrow in the drawings denotes the trajectory of incident light I transmitted through the light transmitting portion 10, and the dashed arrow denotes the trajectory of incident light I absorbed by the light blocking portion 20.

As shown in FIG. 5A, the louver film in which the refractive indices of three layers, i.e., the light transmitting layer, light blocking layer, and adhesive layer, are substantially identical does not cause total reflection at the interfaces between the layers. Therefore, when a certain light transmitting layer is of interest, the incident light I incident at an incident angle of 0° passes through the light transmitting layer, but the incident light I incident at an incident angle exceeding a predetermined angle is absorbed by each of the light blocking layer adjacent to the light transmitting layer and the light blocking layer adjacent to the adhesive layer. **In** contrast, in the louver film 100 having a configuration in which the refractive index of at least one of the light blocking layer and the adhesive layer differs from the refractive index of the light transmitting layer (e.g., a configuration in which the refractive indices of the light transmitting layer and the light blocking layer are substantially identical, and the refractive index of the adhesive layer is smaller than such refractive indices), the trajectory of light differs from that of the louver film shown in FIG. 5A, as illustrated in FIG. 5B. In other words, as illustrated in FIG. 5B, the incident light I incident at an incident angle of 0° passes through the light transmitting layer, and the light directed to the light blocking layer, of the incident light I incident at an incident angle exceeding a predetermined angle, is not totally reflected at the interface between the light transmitting layer and the light blocking layer, but is absorbed by the light blocking layer, and the light directed to the adhesive layer is totally reflected at the interface between the light transmitting layer and the adhesive layer and transmitted through the light transmitting layer. As such, as the louver film 100 has a difference in refractive index from a layer (light blocking layer or adhesive layer) different from, at least, the light transmitting layer among the light transmitting layer, light blocking layer, and adhesive layer, the louver film 100 may totally reflect the incident light I incident on the louver film 100 at the interface between the light transmitting layer and another layer.

The refractive index of each layer (light transmitting layer, light blocking layer, and adhesive layer) of the stack 100A constituting the louver portion 30 of the louver film 100 may be evaluated by a test method compliant with JIS K 7142 using the Abbe refractometer DR-M2 (Atago Co., Ltd.). In measuring the refractive index of each layer, for a layer (e.g., light blocking layer or adhesive layer) forming a layer shape by curing treatment, e.g., upon forming the stack 100A, the pre-curing state may not have a shape (e.g., film shape) appropriate for measurement. In such a case, as an example, a material for forming the measurement object is applied to a PET film (Lumira (registered trademark) T60 (Toray Co., Ltd.)) as a base film so that the dried film has a predetermined thickness (e.g., 50 µm), a coat film is formed under a predetermined curing condition, and the result peeled off the PET film is used as a sample.

As such, if the respective refractive indices of the light transmitting layer, light blocking layer, and adhesive layer are controlled, the louver film 100 may enable partial control of the viewing angle in a specific direction which is difficult to achieve by viewing angle control with the thicknesses (inter-layer pitch width) of the light transmitting layer, light blocking layer, and adhesive layer. Accordingly, the louver film 100 may realize a good light transmittance for the front surface by appropriately changing the refractive indices of the light transmitting layer, light blocking layer, and adhesive layer and may also control the angular range of the light transmitted in a specific direction crossing the front surface to a desired viewing angle. Further, since the viewing angle control is possible depending on the purpose or shape of a device equipped with the louver film 100, the device may come up with a plurality of types of functions according to the viewing angle. For example, in a case where a louver film 100 having a refractive index relationship of "light transmitting layer ≒ light blocking layer > adhesive layer" is mounted in the device, it is possible to make an adjustment so that the light directed to the adhesive layer, of the incident light to the light transmitting layer, is totally reflected at the interface between the light transmitting layer and the adhesive layer and incident on the detector of the device, and the light directed to the light blocking layer is absorbed by the light blocking layer, rather than being totally reflected, to prevent extra light from entering the detector of the device. Therefore, it is possible to increase the accuracy of detection of the device by allowing incident light, which relatively has many signals, to be incident in the direction of the adhesive layer while allowing the other light (light having fewer signals) to be incident in the direction of the light blocking layer.

Further, the louver film 100 may control the viewing angle in a specific direction by controlling at least one of the refractive indices of the light blocking layer and the adhesive layer to differ from the refractive index of the light transmitting layer. However, the louver film 100 may apply thickness control, such as thickness (inter-layer pitch) of each layer or the thickness of the louver portion 30, to refractive index control as described above, thereby more accurately controlling the viewing angle in a specific direction.

Further, when the louver film 100 performs control of the refractive index of each layer of the light transmitting layer, light blocking layer, and adhesive layer, it is preferable to arbitrarily combine the above-described respective refractive indices of the layers within an appropriate refractive index range, although the refractive index of each layer is not particularly limited. Further, when performing thickness control, such as the thickness of the louver portion 30 or the thickness (inter-layer pitch) of each layer, the louver film 100 may control the thickness of the target portion to an appropriate thickness depending on the purpose, after controlling the refractive index.

Hereinafter, a louver film 100 and a method for manufacturing the same are described in greater detail. However, the following description relates to a louver film 100 according to an embodiment of the present invention and a manufacturing method according to an embodiment of the present invention, and the louver film 100 and manufacturing method thereof according to the present invention are not limited to the configurations described below.

In the disclosure, the light transmitting portion 10 has a function (light transmitting property) of transmitting at least some wavelengths of light of interest. It is preferable that the light transmitting unit 10 transmits at least a portion of light of at least some wavelength of interest in a range of 300 nm to 1000 nm.

In the disclosure, the light blocking portion 20 has a function (light blocking property) of blocking at least some wavelengths of light of interest. It is preferable that the light blocking unit 20 blocks at least a portion of light of at least some wavelength of interest in a range of 300 nm to 1000 nm. The light blocking by the light blocking portion 20 may be performed by any one of light reflection, light absorption, or a combination thereof.

The overall light transmittance of the light transmitting portion 10 is not particularly limited, but the higher it is, the more preferable it is. For example, it is preferable that the overall light transmittance of the light transmitting portion 10 be 70% or more, more preferably 75% or more, and even more preferably 80% or more. These ranges exhibit excellent light transmittance within the angular range of light transmitted through the louver film 100.

The overall light transmittance of the light blocking portion 20 is not particularly limited, but the lower it is, the more preferable it is. For example, it is preferable that the overall light transmittance of the light blocking portion 20 be 5% or less, more preferably 3% or less, and even more preferably 1% or less.

The overall light transmittance of the light transmitting portion 10 and the light blocking portion 20 may be evaluated by a test method compliant with JIS K 7361-1:1997 and may be measured by a haze meter (e.g., Nippon Denshoku Kogyo Co., Ltd., model name, NDH-5000W). Further, the measurement of the overall light transmittance of the light transmitting portion 10 and the light blocking portion 20 may be evaluated by preparing a test piece, manufactured identical to the light transmitting portion 10 and the light blocking portion 20, having a measurable film area and the same thickness as those.

The width dimension according to the radiation direction of the louver portion 30 of the light transmitting portion 10 (the width of the light transmitting portion 10, the width L1 of the light transmitting portion 10, along the direction from the winding center C1 toward the outer circumference in a plane orthogonal to the thickness direction of the louver portion 30) may be appropriately set according to the angular range of transmitted light targeted by the louver film 100. The width L1 of the light transmitting portion 10 is not particularly limited, but may be, e.g., 15 µm or more. Further, the width L1 of the light transmitting portion 10 is not particularly limited, but may be, e.g., 100 µm or less. Further, when the light transmitting unit 10 is formed of two or more layers, the width L1 represents the total width thereof. For example, in FIG. 2, the width L1 of the light transmitting portion 10 represents the dimension in the Y direction (left-right direction) in the drawing perpendicular to the height direction of the light transmitting portion 10 (the thickness direction of the louver portion 30). The width L1 of the light transmitting unit 10 according to a preferred embodiment of the present invention may be, e.g., 15 µm or more and 100 µm or less, but is not limited thereto.

Depending on the shape of the louver portion 30, the width L1 of the light transmitting portion 10 may be different depending on the radiation direction of interest. In this case, it is preferable that the width L1 of the light transmitting unit 10 along at least one radiation direction meets the above range. Further, it is more preferable that the width L1 of the light transmitting portion 10 along all radiation directions meets the above range.

The preferred thickness of the light transmitting layer (if it is formed of two or more layered members, the total thickness thereof), and the preferred thickness of the light transmitting layer material layer 110 (if it is formed of two or more layered members, the total thickness thereof) are also identical to the above range. This is because the width L1 of the light transmitting portion 10 may correspond to the thickness of the light transmitting layer depending on the shape of the louver portion 30 and the radiation direction of interest.

The width dimension along the radiation direction of the louver portion 30 of the light blocking portion 20 (the width of the light blocking portion 20 along the direction from the winding center C1 toward the outer circumferential edge in a plane orthogonal to the thickness direction of the louver portion 30 and the width L3 of the light blocking portion 20) may be appropriately set according to the angular range of the desired viewing angle of the louver film 100. Although the width L3 of the light blocking portion 20 is not particularly limited, it is preferable that the width L3 is 20 µm or less, more preferably15 µm or less, and even more preferably 10 µm or less. The width L3 of the light blocking portion 20 is not particularly limited, but preferably 0.01 µm or more. Further, when the light blocking unit 20 is formed of two or more layers, the width L3 represents the total width thereof. For example, in FIG. 2, the width L3 of the light blocking portion 20 represents the dimension in the Y direction (left-right direction) in the drawing perpendicular to the height direction of the light blocking portion 20 (the thickness direction of the louver portion 30). The width L3 of the light blocking unit 20 according to a preferred embodiment of the present invention may be, e.g., 0.01 µm or more and 20 µm or less, 0.01 µm or more and 15 µm or less, or 0.01 µm or more and 10 µm or less, but is not limited thereto.

Depending on the shape of the louver portion 30, the width L3 of the light blocking portion 20 may be different depending on the radiation direction of interest. In this case, it is preferable that the width L3 of the light blocking unit 20 along at least one radiation direction meets the above range. Further, it is more preferable that the width L3 of the light blocking portion 20 along all radiation directions meets the above range.

The preferred thickness of the light blocking layer (if it is formed of two or more layered members, the total thickness thereof), and the preferred thickness of the light blocking layer material layer 120 (if it is formed of two or more layered members, the total thickness thereof) are also identical to the above range. This is because the width L3 of the light blocking portion 20 may correspond to the thickness of the light blocking layer depending on the shape of the louver portion 30 and the radiation direction of interest.

In a preferred embodiment of the present invention, the ratio L2/L1 of the height L2 of the light blocking portion 20 corresponding to the thickness of the louver portion 30 to the width L1 of the light transmitting portion 10 is not particularly limited, but from the viewpoint of viewing angle control, it is preferably 0.5 or more, more preferably 1.0 or more, and even more preferably 1.5 or more. The ratio L2/L1 of the height L2 to the width L1 may be appropriately set to meet the above value depending on the intended viewing angle of the louver film 100. The ratio L2/L1 of the height L2 to the width L1 is not particularly limited, but if the value increases, the angular range of transmitted light narrows, so from the viewpoint of transmitting light in a certain range of angles, it is preferably 30 or less, more preferably 25 or less, and even more preferably 20 or less. For example, in FIG. 2, in a cross-section along the thickness direction of the louver film 100, the width L1 of the light transmitting portion 10 is the width L1 of the light transmitting portion 10 along the radiation direction of the louver portion 30, and the height of the light blocking portion 20 is a height dimension in the Z direction and corresponds to the thickness of the louver portion 30. The ratio L2/L1 of the height L2 to the width L1 according to a preferred embodiment of the present invention may be, e.g., 0.5 or more and 30 or less, 1.0 or more and 25 or less, or 1.5 or more and 20 or less, but is not limited thereto.

Depending on the shape of the louver 30, there are cases where the ratio L2/L1 of the height L2 of the light blocking portion 20 to the width L1 of the light transmitting portion 10 is different by the radiation direction of interest. In this case, it is preferable that the ratio L2/L1 of the height L2 of the light blocking portion 20 to the width L1 of the light transmitting portion 10 along at least one radiation direction meets the above range. Further, it is more preferable that the ratio L2/L1 of the height L2 of the light blocking portion 20 to the width L1 of the light transmitting portion 10 along all radiation directions meets the above range.

The width dimension according to the radiation direction of the louver portion 30 of the louver film 100 (the width along the direction from the winding center C1 toward the outer circumference in a plane orthogonal to the thickness direction of the louver portion 30, the width L4 of the louver portion 30) is appropriately set according to the purpose when equipped in the device, and is not particularly limited.

The angle formed by the direction of the winding axis C of the louver portion 30 and the plane perpendicular to the thickness direction of the louver portion 30 is not particularly limited as long as the direction of the winding axis C of the louver 30 and the plane perpendicular to the thickness direction of the louver portion 30 cross each other. It is preferable that the direction of the winding axis C of the louver portion 30 be orthogonal to a plane orthogonal to the thickness direction of the louver portion 30.

The thickness of the louver portion 30 of the louver film 100 is not particularly limited as long as it may function as the louver film 100, but the smaller the deviation, the more preferable it is, and it is preferable that the thickness be almost constant. In the disclosure, the thickness of the louver portion 30 being almost constant indicates that there may be an unintentional thickness deviation. The thickness of the louver portion 30 of the louver film 100 is not particularly limited, but preferably 1 µm or more. The thickness of the louver portion 30 of the louver film 100 is not particularly limited, but preferably 5,000 µm or less. For example, in FIG. 2, the thickness of the louver portion 30 is the height dimension in the Z direction of the louver portion 30. The thickness of the louver portion 30 according to a preferred embodiment of the present invention may be, e.g., 1 µm or more and 5,000 µm or less, but is not limited thereto.

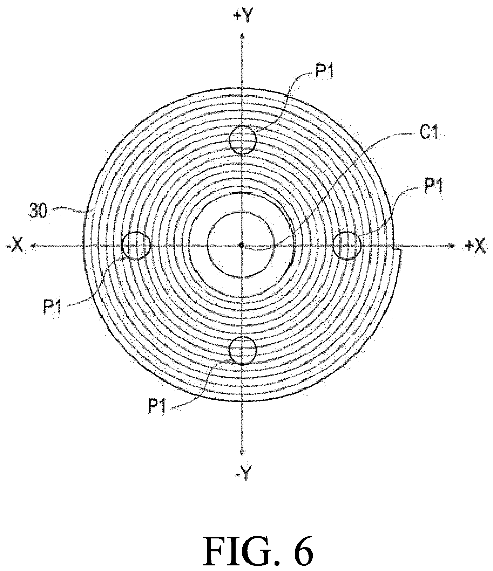

The thickness of the louver portion 30 is represented as an average value of the thicknesses at specific four points (measurement positions P1) on the louver portion, e.g., with respect to the winding center C1 as illustrated in FIG. 6. As illustrated in FIG. 6, the measurement position P1 may be any position on the louver portion 30 from the position where two axes (X axis and Y axis) cross each other, on the two axes, (the position matches the winding center C1) toward the outer circumference by a predetermined distance, in a orthogonal coordinate system set to pass through the winding center C1 at plan view of the louver film 100 including the core material 40. Further, " + X", "X", " + Y", and "Y" in the drawings each represent a direction of the orthogonal coordinate system.

The number of turns of the winding structure of the louver portion 30 of the louver film 100 (the number of turns of the stack 100A including the light transmitting layer and the light blocking layer in the winding structure) may be appropriately changed depending on the manufacturing method of the louver film 100 or the use when mounted in a device, and is not particularly limited. The number of turns of the winding structure of the louver portion 30 of the louver film 100 may be, e.g., 2 turns or more, e.g., 5 turns or more. The number of turns of the winding structure of the louver portion 30 of the louver film 100 may be, e.g., 100,000 turns or less. The thickness of the louver portion 30 according to a preferred embodiment of the present invention may be, e.g., 2 turns or more and 100,000 turns or less, or 5 turns or more and 100,000 turns or less. However, the number of turns of the winding structure of the louver portion 30 of the louver film 100 may be selected as a desired number of turns depending on, e.g., the size of the device. Accordingly, the number of turns of the winding structure of the louver portion 30 of the louver film 100 is not limited to the above range, and may be, e.g., 100,000 turns or less.

In a preferred embodiment of the present invention, the external shape of the louver portion 30 at plan view (the external shape in a plane perpendicular to the thickness direction of the louver portion 30) is not particularly limited, but may be, e.g., circular, oval, polygonal, etc. The determination of the external shape of the louver portion 30 at plan view is performed without considering a step that exists at the outer circumference of the louver portion 30 due to the start or end of winding of the stack 100A. The polygon includes a rough polygon with rounded corners is also included. For example, the square may be a rough square with rounded corners. Among these, a circle or a polygon (including a rough polygon) is preferable, a circle or a square (including a rough square) is more preferable, a circle or a square with rounded corners (track shape) is even more preferable, and a circle is particularly preferable.

In a preferred embodiment of the present invention, at plan view of the louver portion 30, the ratio of the area of the light blocking portion 20 to the total area of the surface of the louver portion 30 (a plane perpendicular to the thickness direction of the louver portion 30) is not particularly limited. It is preferable that the area occupied by the light blocking portion 20 be 50% or less, more preferably 30% or less, even more preferably 25% or less, and particularly preferably 20% or less (exceeding a lower limit of 0%). Within these ranges, the light transmittance of the louver film 100 itself is further enhanced. When the louver portion 30 is formed of only the light transmitting portion 10 and the light blocking portion 20, the total area of the surface of the louver portion 30 becomes the total area of the light transmitting portion 10 and the light blocking portion 20. The ratio of the area of the light blocking portion 20 to the total area of the surface of the louver portion 30 according to a preferred embodiment of the present invention may include, but is not limited to, e.g., more than 0% and less than or equal to 50%, more than 0% and less than or equal to 30%, more than 0% and less than or equal to 25%, more than 0% and less than or equal to 20%.

**In** a preferred embodiment of the present invention, the higher the overall light transmittance of the louver film 100, the more preferable it is. For example, the overall light transmittance of the louver film 100 is preferably 55% or more, more preferably 60% or more, even more preferably 65% or more, and particularly preferably 70% or more. The overall light transmittance of the louver film 100 is not particularly limited, but may be, e.g., less than 100%. The overall light transmittance of the louver film 100 according to a preferred embodiment of the present invention may be, e.g., 55% or more and less than 100%, 60% or more and less than 100%, 65% or more and less than 100%, 70% or more and less than 100%, etc., but is not limited thereto.

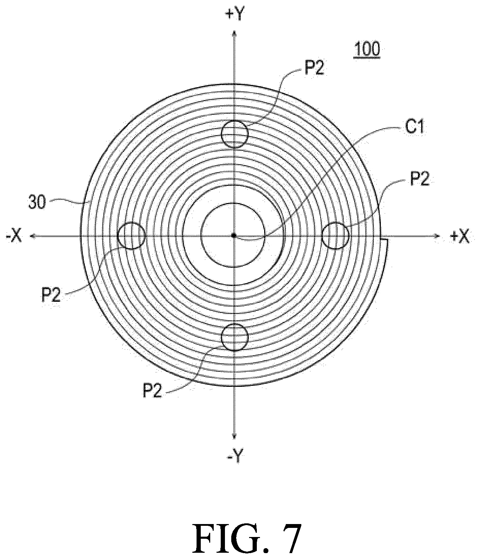

The overall light transmittance of the louver film 100 may be evaluated by a test method compliant with JIS K 7361-1:1997 and may be measured by a haze meter (e.g., Nippon Denshoku Kogyo Co., Ltd., model name, NDH-5000W). The overall light transmittance of the louver film 100 is represented as the average value of the overall light transmittance at four specific points (measurement positions P2) on the louver film 100, as illustrated in FIG. 7. As illustrated in FIG. 7, the measurement position P2 may be any position on the louver portion 30 from the position where two axes (X axis and Y axis) cross each other, on the two axes, (the position matches the winding center C1) toward the outer circumference by a predetermined distance, in a orthogonal coordinate system set to pass through the winding center C1 at plan view of the louver film 100 including the core material 40. Further, " + X", "X", " + Y", and "Y" in the drawings each represent a direction of the orthogonal coordinate system.

Further, since the louver film 100 is small in size, for accurate measurement, the overall light transmittance may be measured for each of the four points above, by measuring the overall light transmittance A of the light blocking film having a 2 mmΦ hole, placing the louver film 100 on the area of the hole and measuring the overall light transmittance B, and calculating the overall light transmittance (unit: %) of the louver film 100 = overall light transmittance B/overall light transmittance A × 100. However, if the size of the louver film 100 is large enough to allow accurate measurement without performing the above-described manipulation and calculation, measurement of the louver film 100 may be performed without using the light blocking film with a 2 mmΦ hole, and the obtained value, itself, may be used as the result of the overall light transmittance (unit: %) at each point. The louver film 100 may be evaluated as the average value of the overall light transmittance at the four points as the overall light transmittance of the film (unit: %).

The transmittance of the louver film (100) may be evaluated using a Conoscope from Autronic Melchers, as a backlight and viewing angle measurement evaluation device. As an evaluation method, the manufactured louver film 100 is placed on a backlight, the backlight is turned on, and the angle of light (viewing angle) and the luminance 2 (unit: cd/m2) at each angle are measured in the same way, and the transmittance (light transmittance) of the light passing through the louver film 100 for each angle may be calculated by calculating the transmittance (light transmittance) of the light passing through the louver film 100 (unit: %) = luminance 2/luminance 1 × 100. Details of an example of a measurement method are described in an embodiment.

When at least a portion of the light transmitting layer material layer 110 has curability, at least a portion of the light transmitting portion 10 may be formed of the light transmitting layer material layer 110 before curing, or may be formed of the light transmitting layer material layer 110 after curing. The light transmitting layer material layer 110 includes a layered member having curability, and at least a portion of the light transmitting portion 10 is preferably formed of the layered member after curing, and a portion of the light transmitting portion 10 is preferably formed of the layered member after curing. Although not particularly limited as the layered member having curability, an adhesive layer functioning as an adhering layer is preferable. In other words, it is preferable that the light transmitting layer material layer 110 includes an adhesive layer, and it is preferable that the light transmitting portion 10 is a layer obtained from the adhesive layer (an adhesive layer after curing).

The thicknesses of the light transmitting layer and the light transmitting layer material layer 110 are not particularly limited as long as it may function as the louver film 100, but the smaller the deviation, the more preferable it is, and it is particularly preferable that the thicknesses be almost constant. In the disclosure, the thicknesses of the light transmitting layer and the light transmitting layer material layer 110 being almost constant indicates that there may be an unintentional thickness deviation. A preferred thickness range of the light transmitting layer and the light transmitting layer material layer 110 may be, e.g., the same as the preferred range of the width L1 of the light transmitting portion 10 described above.

When at least a portion of the light blocking layer material layer 120 has curability, at least a portion of the light blocking portion 20 may be formed of the light blocking layer material layer 120 before curing, or may be formed of the light blocking layer material layer 120 after curing. The light blocking layer material layer 120 may include a layered member having curability, and at least a portion of the light blocking portion 20 may be formed of the layered member after curing. It is more preferable that a portion of the light blocking portion 20 is formed of the layered member after curing. Although not particularly limited as the layered member having curability, an adhesive layer functioning as an adhering layer is preferable. In other words, the light transmitting layer material layer 120 may include an adhesive layer, and it is preferable that the light blocking portion 20 is a layer obtained from the adhesive layer (an adhesive layer after curing).

The thicknesses of the light blocking layer and the light blocking layer material layer 120 are not particularly limited as long as it may function as the louver film 100, but the smaller the deviation, the more preferable it is, and it is particularly preferable that the thicknesses be almost constant. In the disclosure, the thicknesses of the light blocking layer and the light blocking layer material layer 120 being almost constant indicates that there may be an unintentional thickness deviation. A preferred thickness range of the light blocking layer and the light blocking layer material layer 120 may be, e.g., the same as the preferred range of the width L3 of the light blocking portion 20 described above.

The louver film 100 may further include other members in addition to the louver portion 30. The other members are not particularly limited, but may include, e.g., a core material 40, a functional layer F, and a substrate to be described below.

It is preferable that the louver film 100 further includes a core material 40. For example, when the louver film 100 is manufactured, the core material 40 may function as a core portion disposed in the winding center when the stack 100A is wound. The louver film 100 may further include the core material 40, and the wound structure is preferably a structure in which the stack 100A including the light transmitting layer and the light blocking layer is wound around the core material 40. The core material 40 may have a hollow container or columnar shape. The core material 40 may be transparent or opaque.

The wound structure of the stack 100A including the light transmitting layer and the light blocking layer, wound around the core material 40, is not particularly limited. For example, the wound structure may be, e.g., a wound structure in a state in which the one long stack 100A including a light transmitting layer and a light blocking layer is wound around the core material 40 to overlap in a roll shape. An example may be a wound structure in a state in which a plurality of stacks 100A including a light transmitting layer and a light blocking layer are wound around the core material 40 so that the light transmitting layer and the light blocking layer are alternately disposed in a concentric circle around the core material 40. Among them, the wound structure in a state in which the one long stack 100A including a light transmitting layer and a light blocking layer is wound around the core material 40 to overlap in a roll shape is preferable. It is preferable that the wound structure is a wound structure in a state in which one long stack 100A is wound around the core material 40 with the winding axis C matching the axial direction of the core material 40 as the winding center C1. The wound structure shown in FIGS. 1 and 2 is an example of such a wound structure.

The external shape of the cross section in a plane orthogonal to the axial direction of the core material 40 is not particularly limited, but may include, e.g., a circle, an oval, or a polygon. The polygon includes a rough polygon with rounded corners is also included. For example, the square may be a rough square with rounded corners. Among these, a circle or a polygon (including a rough polygon) is preferable, a circle or a square (including a rough square) is more preferable, a circle or a square with rounded corners (track shape) is even more preferable, and a circle is particularly preferable. When the core material 40 is hollow, the hole portion 50 of the hollow core material 40 may be empty or may be filled with any material. The material for filling the hole portion 50 of the hollow core material 40 is not particularly limited, but may include, e.g., the same material as the functional layer F that the louver film 100 to be described below may have.

The outer diameter (maximum diameter when the shape is not circular) of the cross section in a plane orthogonal to the axial direction of the core material 40 may be appropriately changed according to the manufacturing method of the louver film 100 or the use when mounted in the device, and is not particularly limited. When the louver film 100 includes the core material 40, the outer diameter of the core material 40 in the louver film 100 is not particularly limited, but the outer diameter (maximum diameter when the shape is not circular) of the louver portion 30 may be 10% or more. When the louver film 100 includes the core material 40, the outer diameter of the core material 40 in the louver film 100 is not particularly limited, but for example, the outer diameter (maximum diameter when the shape is not circular) of the louver portion 30 may be 90% or less. The outer diameter of the core material 40 in the louver film 100 according to a preferred embodiment of the present invention may be, e.g., 10% or more and 90% or less of the outer diameter of the louver portion 30. However, the outer diameter of the core material 40 in the louver film 100 is not limited to the above range, and may be appropriately selected according to the configuration of the device. Accordingly, the outer diameter of the core material 40 in the louver film 100 may be, e.g., less than 10% of the outer diameter (maximum diameter when the shape is not circular) of the louver portion 30, or may be more than 90% of the outer diameter (maximum diameter when the shape is not circular) of the louver portion 30.

Although the thickness of the core material 40 in the louver film 100 is not particularly limited, it is preferable that the thickness of the core material 40 and the thickness of the louver portion 30 are the same, and for example, it may be in the exemplified thickness range of the louver portion 30.

The louver film 100 may not include the core material 40, and the louver portion 30 may have a wound structure in a state in which the stack 100A including the light transmitting layer and the light blocking layer is wound.

It is preferable that the louver film 100 includes a functional layer F disposed on one or two opposite surfaces of the louver portion 30. Here, "disposed on the surface" indicates that it may be disposed in direct contact with the surface of the louver portion 30 or may be disposed on the surface of the louver portion 30 with another member intervening therebetween. Among them, it is preferable that it is disposed in direct contact with the surface of the louver portion 30. The functional layer F may be disposed on one or two opposite surfaces of the louver portion 30, but it is preferable that it is disposed on two opposite surfaces. The louver film 100 may include a substrate. When each of the functional layer F and the substrate is set to a desired thickness, it is preferable that it may transmit at least a portion of light of at least some wavelengths of interest. When each of the functional layer F and the substrate has a desired thickness, it is more preferable that it may transmit at least a portion of light of at least some wavelength of interest in a range of 300 nm to 1000 nm. The overall light transmittance of the functional layer F and the substrate is not particularly limited, but the higher the light transmittance, the more preferable it is. The overall light transmittance of the functional layer F and the substrate is preferably 70% or more, more preferably 75% or more, and even more preferably 80% or more. These ranges exhibit excellent light transmittance within the angular range of light transmitted through the louver film 100. When there are a plurality of functional layers F, it is preferable that the overall light transmittance of each layer meets the above range. When there are a plurality of substrates, it is preferable that the overall light transmittance of each substrate meets the above range.

The overall light transmittance of the functional layer F and the substrate may be evaluated by a test method compliant with JIS K 7361-1:1997 and may be measured by a haze meter (e.g., Nippon Denshoku Kogyo Co., Ltd., model name, NDH-5000W).

Although not particularly limited, the functional layer F may be a functional layer used in a known optical film field. As functional layers F, various functional layers, such as a protection layer, an anti-glare layer, an easy adhesive layer, a pressure sensitive adhesive layer, and an adhesive layer may be exemplified. Among them, the protective layer is more preferable.

The thickness of the protective layer (the thickness of each layer when multiple protective layers are provided) is not particularly limited. It is preferable that the thickness of the protective layer is a thickness capable of ensuring a protective function without affecting the transmittance of the louver unit 30. From the viewpoint of further enhancing the function as a protective layer, it is preferable that it is 1 µm or more, more preferably 3 µm or more, and even more preferably 5 µm or more. Further, the thickness of the protective layer is preferably 30 µm or less, more preferably 25 µm or less, and even more preferably 20 µm or less, from the viewpoint of having a smaller effect on the transmittance of the louver portion 30. Examples of the thickness of the protective layer according to a preferred embodiment of the present invention include, but are not limited to, 1 µm or more and 30 µm or less, 3 µm or more and 25 µm or less, and 5 µm or more and 20 µm or less. Further, it is preferable that the protective layer is provided on at least one surface of the louver layer, and it is preferable that the protective layer is provided on two opposite surfaces.

In a preferred embodiment of the present invention, the louver film 100 includes a core material 40 in addition to the louver portion 30. In a more preferred embodiment of the present invention, the louver film 100 includes a core material 40 and a functional layer F (preferably a protective layer) in addition to the louver portion 30. In a more preferred embodiment of the present invention, the louver film 100 includes a hollow core material 40, a functional layer F (preferably a protective layer), and a hole portion 50 of the hollow core material 40 in addition to the louver portion 30.

Hereinafter, constituent materials of each member constituting the louver film 100 are described.

### <Material layer for light transmitting layer>

The configuration of the light transmitting layer material layer 110 constituting the light transmitting layer is not particularly limited. The light transmitting layer material layer 110 may be formed of one or two or more layered members, or it is preferable that the light transmitting layer material layer 110 is formed of two or more layered members. When the light transmitting layer material layer 110 is formed of two or more layered members, the angular range of transmitted light may be controlled by adjusting the refractive index of the members constituting the layered members.

The method for forming a layered member for forming at least a portion of the light transmitting layer material layer 110 is not particularly limited, and for example, a known method may be appropriately employed.

Although not particularly limited, the layered member constituting the light transmitting layer material layer 110 may be, e.g., a film, a thin film, and the like. Among them, it is preferable that the light transmitting layer material layer 110 includes a film (in the disclosure, the film that the light transmitting layer material layer 110 may have is also referred to as a light transmitting layer film 110a) and a functional layer (in the disclosure, the functional layer that the light transmitting layer material layer 110 may have is also referred to as a light transmitting layer functional layer 110b). Since the film thickness of each of the light transmitting layer film 110a and the light transmitting layer functional layer 110b is easy to control, it is easier to control the angular range of transmitted light. The light transmitting layer film 110a is not particularly limited, but a resin film is preferable. The light transmitting layer functional layer 110b is not particularly limited, but may include various functional layers such as a hard coat layer, an anti-glare layer, an easy adhesive layer, a pressure sensitive adhesive layer, and an adhesive layer and a cured layer thereof. It is preferable that the light transmitting layer functional layer 110b includes a pressure sensitive adhesive layer or an adhesive layer that functions as an adhering layer from the viewpoint of ease of formation of a wound structure and strength and stability of the wound structure, and it is preferable that the functional layer 110b includes an adhesive layer. In a preferred embodiment of the present invention, the light transmitting layer material layer 110 includes a resin film and an adhesive layer.

Although the constituent material of the light transmitting layer material layer 110 is not particularly limited, it is preferable to include a resin. In the disclosure, the resin as a material of the light transmitting layer material layer 110 is not particularly limited as long as it is a resin capable of transmitting light to the extent that the layer (or the layer processed to be a light transmitting layer) is capable of becoming the light transmitting portion 10 when a layer having a desired thickness is formed. The resin as the material of the light transmitting layer material layer 110 may include, e.g., a cellulose resin such as cellulose diacetate, cellulose striacetate, or the like, a polyester resin such as polyethylene terephthalate (PET), polyethylene naphthalate, or the like, a (meth)acrylic resin such as polymethyl acrylate, polymethyl methacrylate, methyl methacrylate, methyl acrylate copolymer, or the like, a polystyrene resin, a polycarbonate resin, a polyolefin resins such as polyethylene, polypropylene, ethylene and propylene copolymers, a cyclic olefin resin such as cycloolefin polymer, a polyvinyl chloride resin, a polyamide resin such as nylon or aromatic polyamide, a polyimide resin, a polysulfone resin, a polyethersulfone resin, a polyether ether ketone resin, a polyphenylene sulfide resin, a polyvinyl alcohol resin, a polyvinylidene chloride resin, a polyvinylbutyral resin, a polyarylate resin, a polyoxymethylene resin, an epoxy resin, a silicone resin, or a polyurethane resin. Among them, a polyester resin and an epoxy resin are preferable, and PET and an epoxy resin are more preferable. As the resin, a single type or a combination of two or more types may be used. When two or more types of resins are used in combination, these resins may be included in one layered member or may be included in different layered members.

The light transmitting layer material layer 110 may further contain an additive. Although not particularly limited, the additive may be known additives used in the resin film field, the optical film field, the pressure sensitive adhesive field, the adhesive field, and the functional layer field.

When the light transmitting layer material layer 110 includes the light transmitting layer film 110a, the light transmitting layer film 110a is not particularly limited, but is preferably a resin film. It is preferable that the resin film is a film including one or two or more types of resins exemplified as the material of the light transmitting layer material layer 110. Among them, preferred examples of the resin film may include a cellulose resin film such as a cellulose diacetate film, a cellulose triacetate film or the like, a polyester resin film such as a polyethylene terephthalate (PET) film, a polyethylene naphthalate film or the like, a (meth)acrylic resin film such as a polymethyl acrylate film, a polymethyl methacrylate film, a methyl methacrylate/methyl acrylate copolymer film or the like, a polyolefin resin film such as a polycarbonate resin film, a polyethylene film, a polypropylene film, an ethylene/propylene copolymer film or the like, a cyclic olefin resin film such as a cycloolefin polymer or the like. Among them, a polyester resin film is more preferable, and a PET film is more preferable. As the resin film, a single type or a combination of two or more types may be used.

As the resin film, a commercially available product or a manufactured product may be used. The commercially available product is not particularly limited. The commercially available products of PET films may include, e.g., Toyobo Co., Ltd. Cosmoshine (registered trademark) series (e.g., Cosmoshine (registered trademark) A4360 various products). Examples of commercially available products of annular olefin resin films may include the Aton (registered trademark) series of JSR Co., Ltd., the Zeonex (registered trademark) series of Nippon Zeon Co., Ltd., and the Zeonoa (registered trademark) series. Examples of commercially available products of (meth)acrylic resin films include acrylic films RT, SO, and HI series of Curare Co., Ltd. Examples of commercially available products of TAC films include Fuji-TAC (registered trademark) series (UV-50, UV-80, SH-80, TG40UL, TD-80 U, TD-TAC, UZ-TAC), etc.

When the light transmitting layer material layer 110 includes the light transmitting layer functional layer 110b, the light transmitting layer functional layer 110b is not particularly limited, but it is preferable that it includes one or two or more types resins exemplified as the material of the light transmitting layer material layer 110. When the light transmitting layer functional layer 110b is a pressure sensitive adhesive layer or an adhesive layer, the pressure sensitive adhesive layer or the adhesive layer preferably includes at least one resin selected from the group consisting of a polyvinyl alcohol resin, a (meth)acrylic resin such as polymethyl acrylate, polymethyl methacrylate, methyl methacrylate/methyl acrylate copolymer or the like, an epoxy resin, and a urethane resin. Among them, it is preferable to include an epoxy resin. It is preferable that the light transmitting layer functional layer 110b is at least one selected from the group consisting of a pressure sensitive adhesive layer and an adhesive layer, more preferably a pressure sensitive adhesive layer or an adhesive layer, and even more preferably an adhesive layer. When the light transmitting layer functional layer 110b is at least one selected from the group consisting of a pressure sensitive adhesive layer and an adhesive layer, the forming material is not particularly limited, but may include, e.g., a polyvinyl alcohol adhesive, an acrylic adhesive, an epoxy adhesive, a urethane adhesive, or the like. As the light transmitting layer functional layer 110b, a single type or a combination of two or more types may be used.

The light transmitting layer functional layer 110b may be formed using a commercially available product or may be formed using a manufactured product. When the light transmitting layer functional layer 110b is formed, a commercially available product as a material for forming the light transmitting layer functional layer 110b is not particularly limited. Examples of the material for forming the adhesive layer, which is one of the functional layers 110b for the light transmitting layer, may include commercially available epoxy adhesives (e.g., epoxy adhesive 1565 primary material and curing agent D of Cemedine Co., Ltd.). Further, as the manufactured product, one obtained by mixing/stirring a mixture obtained by adding and mixing 1wt% of the promoter (Seikuol TDMP (Seiko Kagaku Co., Ltd.) to an epoxy resin (denacol EX-321 (Nagase Chemtex Co., Ltd.), refractive index: 1.46: curing agent (QE340M (Toray Fine Chemicals), refractive index: 1.50) = 48:52 (mass ratio), with methyl ethyl ketone so that the solid content concentration is 80 mass% (equivalent to the coating solution for forming the adhesive layer of prescription 1 shown in the embodiment), or one obtained by mixing/stirring a mixture obtained by adding and mixing 1wt% of the promoter (Seikuol TDMP (Seiko Kagaku Co., Ltd.) to an epoxy resin (bisphenol A-type epoxy resin RE310S (Nippon Kayaku), refractive index: 1.57): curing agent (QE340M (Toray Fine Chemicals), refractive index: 1.50 = 55:45 (mass ratio), with methyl ethyl ketone so that the solid content concentration is 80 mass% (equivalent to the coating solution for forming the adhesive layer of prescription 2 shown in the embodiment) may be preferably used. Further, the material for forming the adhesive layer forming the adhesive layer is not particularly limited as long as it is formed of a material capable of functioning as an adhesive layer without compromising the function of the louver film 100.

When the light transmitting layer material layer 110 includes the light transmitting layer film 110a, the thickness of the light transmitting layer film 110a may be in a range in which a control effect of a desired angle of light may be obtained. The thickness range of the light transmitting layer film 110a may be, e.g., 5 µm or more, 10 µm or more, or 15 µm or more, but is not limited thereto. The thickness range of the light transmitting layer film 110a may be, e.g., 100 µm or less, 95 µm or less, 90 µm or less, and 85 µm or less, but is not limited thereto. Examples of the thickness range of the light transmitting layer film 110a according to a preferred embodiment of the present invention include, but are not limited to, 5 µm or more and 100 µm or less, 10 µm or more and 95 µm or less, 15 µm or more and 90 µm or less, and 15 µm or more and 85 µm or less. When the light transmitting layer material layer 110 includes the light transmitting layer functional layer 110b, the thickness of the light transmitting layer functional layer 110b may be a range in which a control effect of a desired angle of light may be obtained. The range of the thickness of the light transmitting layer functional layer 110b may be, e.g., larger than 0 µm and less than or equal to 20 µm, larger than 0 µm and less than or equal to 15 µm, or larger than 0 µm and less than or equal to 10 µm, but is not limited thereto. For example, when a treatment (e.g., curing) is required to form at least a portion of the light transmitting layer, such as an adhesive layer, these thicknesses each represent a value of the thickness in the post-treatment state. The thickness of the light transmitting layer film 110a and the thickness of the light transmitting layer functional layer 110b indicate the length of the light transmitting layer film 110a in the film thickness direction and the length of the light transmitting layer functional layer 110b in the film thickness direction, respectively.

### <Material layer for light blocking layer>

The light blocking layer material layer 120 has a light blocking property. The light blocking layer material layer 120 may have light absorbency, light reflectivity, or a combination thereof. Among them, it is preferable that the light blocking layer material layer 120 is formed of a member having light absorbency.

The color tone of the light blocking layer material layer 120 may suffice as long as a preferable light blocking property may be obtained, and may be, e.g., black, red, yellow, green, blue, or water color. The color tone may be adjusted by the type and amount used (amount added/amount contained) of the light absorbing material.

The configuration of the light blocking layer material layer 120 is not particularly limited. The light blocking layer material layer 120 may be formed of one or two or more layered members, or it is preferable that it is formed of a single layered member. Although not particularly limited, the layered member constituting the light blocking layer material layer 120 may be, e.g., a film, a thin film, and the like.

A method for forming a layered member for forming at least a portion of the light blocking layer material layer 120 is not particularly limited. The layered member for forming at least a portion of the light blocking layer material layer 120 may be formed by a known method, e.g., a solution casting method, a melt casting method, an application method, a sputtering method, a deposition method, an ion plating method, a chemical deposition method (CVD method), or the like.

It is preferable that the light blocking layer material layer 120 includes a material having light absorbency. Although not particularly limited, the material having light absorbency may be, e.g., a colorant such as a dye or pigment. Without being particularly limited, the pigment may be an organic pigment or an inorganic pigment, e.g., known pigments such as carbon black, Bengala, iron oxide, titanium oxide, yellow iron oxide, disazo yellow, phthalocyanine blue or the like. Although not particularly limited, the dye may be known black dyes such as C.I. direct black 19, 22, 32, 38, 51, 56, 71, 74, 75, 77, 154, 168 and 171. Examples of the dye may include a xanthene -based dye, an azo-based dye, or an aniline-based dye. Organic particulates colored with a colorant or glass beads colored with a colorant may be exemplified. Although not particularly limited, the material having light absorbency may be, e.g., a colored material such as graphite. As the material having light absorbency, a single type or a combination of two or more types may be used. When two or more types of materials having light absorbency are used in combination, these materials may be included in one layered member or may be included in different layered members.

The light blocking layer material layer 120 may be formed of only a light absorbing material, or may be formed of a light absorbing material and another material. The other material is not particularly limited, but may include, e.g., materials constituting the light transmitting layer material layer 110 described above. For example, a resin exemplified as a material of the light transmitting layer material layer 110 may be exemplified.

Further, the light blocking layer material layer 120 may further contain an additive. Although not particularly limited, the additive may be known additives used in the resin film field, the optical film field, the pressure sensitive adhesive field, the adhesive field, and the functional layer field. It is preferable that the light blocking layer material layer 120 includes a colorant (e.g., a pigment, a dye, etc.) and a resin, and it is more preferable that it includes a pigment and a resin.

The light blocking layer material layer 120 may be formed by containing the light absorbing material by an amount for implementing desired light absorbency for each of the light transmitting layer film 110a (preferably a resin film) and the light transmitting layer functional layer 110b in the description of, e.g., the light transmitting layer material layer 110.

The light blocking layer material layer 120 may be a film (in the disclosure, a film that the light blocking layer material layer 120 may have is also referred to as a light blocking layer film), a functional layer (in the disclosure, a functional layer that the light blocking layer material layer 120 may have is also referred to as a light blocking layer functional layer), or a combination thereof. Among them, it is preferable that it is a light blocking layer functional layer. The light blocking layer functional layer is not particularly limited, but may include various colored layers (preferably a black layer) having light absorbency such as, e.g., an ink layer, a hard coat layer having light absorbency, an anti-glare layer having light absorbency, an easy adhesive layer having light absorbency, a pressure sensitive adhesive layer having light absorbency, and an adhesive layer having light absorbency, and a cured layer thereof. Among them, it is preferable that it is at least one type of layer selected from the group consisting of an ink layer, a pressure sensitive adhesive layer having light absorbency, and an adhesive layer having light absorbency. Further, it is more preferable that it is an ink layer (a layer formed of ink, e.g., a layer including a pigment and/or a dye and a resin, preferably a layer including a pigment and a resin, etc.). A black ink layer (e.g., a layer including a black pigment and/or a black dye and resin, preferably a layer including a black pigment and resin, etc.) is more preferable. Depending on the prescription of the material for forming such a layer, it is often possible to form it by a method that makes it easy to control the thickness of the film such as application. As a result, it becomes easier to control the angular range of transmitted light. Further, since the thickness of the light blocking layer material layer 120 may be further decreased, the width of the light blocking portion 20 may be narrowed as a result, thereby realizing a good light transmittance for the front surface of the louver film 100. Further, it is expected to secure better performance (luminance and contrast) in a device using the louver film 100.

The light blocking layer material layer 120 may be formed using a commercially available product or may be formed using a manufactured product. When the light blocking layer material layer 120 is formed, the commercially available product of the light blocking layer forming material is not particularly limited. Examples of commercially available material of the colored layer forming material may include a commercially available ink (e.g., EG Ink (EG-911 black) from Teikoku Ink Co., Ltd.). As the manufactured product, one obtained by dispersing 25wt% of BASF's Paliotol (registered trademark) Black L 0080 to 75wt% of the thermosetting epoxy resin may be used. The thermoplastic epoxy resin used in the light blocking layer material layer 120 is not particularly limited, and for example, an epoxy resin that may be used in the light transmitting layer material layer 110 or the light transmitting layer functional layer 110b, or a mixture in which other materials such as a curing agent are mixed with the epoxy resin may be used.

It is preferable that the light blocking layer material layer 120 includes a pressure sensitive adhesive layer or an adhesive layer that functions as an adhering layer from the viewpoint of ease of formation of a wound structure and strength and stability of the wound structure, and it is preferable that the functional layer 110b includes an adhesive layer. In a preferred embodiment of the present invention, the light blocking layer material layer 120 includes a resin film and an adhesive layer. As the material constituting the adhesive layer, an adhesive having a light blocking property, obtained by mixing a pigment or dye usable in the light blocking layer material layer 120 with an adhesive usable in the light transmitting layer functional layer 110b may be used.

The thickness of the light blocking layer film is not particularly limited, and may be in a range in which a control effect of a desired angle of light may be obtained. An example of the range of the thickness of the light blocking layer film is the same as an example of the range of the thickness of the light transmitting layer film 110a. The thickness of the light blocking layer functional layer is not particularly limited, and may be in a range in which a control effect of a desired angle of light may be obtained. An example of the range of the thickness of the light blocking layer functional layer is the same as an example of the range of the thickness of the light transmitting layer functional layer 110b. For example, when a treatment (e.g., curing) is required to form at least a portion of the light blocking layer, such as an adhesive layer, these thicknesses each represent a value of the thickness in the post-treatment state.

It is preferable that at least one member selected from the group consisting of the light transmitting layer material layer 110 and the light blocking layer material layer 120 includes at least one selected from the group consisting of a pressure sensitive adhesive and an adhesive functioning as the adhesive layer, it is more preferable to include the pressure sensitive adhesive or the adhesive layer, and it is even more preferable to include the adhesive. By including the adhesive layer in at least one member of the light transmitting layer material layer 110 and the light blocking layer material layer 120, it is easier to form the wound body 100B, and it is possible to form a stronger and more stable wound body 100B. The adhesive layer may be formed of a layered member having a light transmitting property to function as a portion of the light transmitting portion 10, or a layered member having a light blocking property to function as the light blocking portion 20.

### <Overall light transmittance of light transmitting layer material layer and light blocking layer material layer>

The overall light transmittance of the light transmitting layer material layer 110 is not particularly limited, but the higher it is, the more preferable it is. It is preferable that the overall light transmittance of the light transmitting layer material layer 110 be 70% or more, more preferably 75% or more, and even more preferably 80% or more. The overall light transmittance of the light transmitting layer material layer 110 is preferably 70% or more, more preferably 75% or more, and even more preferably 80% or more, if the light transmitting layer material layer 110 includes two or more layered members. These ranges exhibit excellent light transmittance within the angular range of light transmitted through the louver film 100. In the disclosure, when at least a portion of the light transmitting layer material layer 110 is a layered member before treatment (e.g., curing treatment) for forming a light transmitting layer, and at least a portion of the light transmitting layer is formed through such treatment, the overall light transmittance of the layered member represents a value of the overall light transmittance in a post-treatment state (a state thought to be the same as in the light transmitting layer).

When the layered member constitutes at least a portion of the light transmitting layer through treatment (e.g., curing treatment) for forming the light transmitting layer, it is preferable to meet the range of the overall light transmittance in both the pre-treatment state and the post-treatment state.

The overall light transmittance of the light blocking layer material layer 120 is not particularly limited, but the lower it is, the more preferable it is. It is preferable that the overall light transmittance of the light blocking layer material layer 120 be 5% or less, more preferably 3% or less, and even more preferably 1% or less. As the overall light transmittance of the light blocking layer material layer 120, if the light blocking layer material layer 120 includes two or more layered members, it is preferable that the overall light transmittance of each layered member meets the same range as the preferred range of the overall light transmittance of the light blocking portion 20. In these ranges, the control effect of the angle of light passing through the louver film 100 is further enhanced. In the disclosure, when at least a portion of the light blocking layer material layer 120 is a layered member before treatment (e.g., curing treatment) for forming a light blocking layer, and at least a portion of the light blocking layer is formed through such treatment, the overall light transmittance of the layered member represents a value of the overall light transmittance in a post-treatment state (a state thought to be the same as in the light blocking layer).

When the layered member constitutes at least a portion of the light blocking layer through treatment (e.g., curing treatment) for forming the light blocking layer, it is preferable to meet the range of the overall light transmittance in both the pre-treatment state and the post-treatment state.

The overall light transmittance of the light transmitting layer material layer 110, the light blocking layer material layer 120, and the layered members included therein may be evaluated by a test method compliant with JIS K 7361-1:1997 and may be measured by a haze meter (e.g., Nippon Denshoku Kogyo Co., Ltd., model name, NDH-5000W). The overall light transmittance of the light transmitting layer material layer 110 and the layered member included therein is a value obtained by measuring in the thickness direction (the film thickness direction of the light transmitting layer material layer 110 and the stacking direction in the stack 100A). The overall light transmittance of the light blocking layer material layer 120 and the layered member included therein is a value obtained by measuring in the thickness direction (the film thickness direction of the light blocking layer material layer 120 and the stacking direction in the stack 100A).

It is preferable that the light transmitting layer constituting the light transmitting portion 10 is formed of a layered member (a layered member constituting the light transmitting layer material layer 110) having one or two or more overall light transmittances of 70% or more, as a material, and the light blocking layer constituting the light blocking portion 20 is formed of a layered member (a layered member constituting the light blocking layer material layer 120) having one or two or more overall light transmittances of 5% or less, as a material. In this case, the preferred range of the overall light transmittance of the layered member constituting the light transmitting layer material layer 110 (or each layered member when two or more layered members are used as the material) is the same as the preferred range of the overall light transmittance of the light transmitting layer material layer 110. Further, the preferred range of the overall light transmittance of the layered member constituting the light blocking layer material layer 120 (or each layered member when two or more layered members are used as the material) is the same as the preferred range of the overall light transmittance of the light blocking layer material layer 120. As described above, when the layered member constitutes at least a portion of the targeted layer through treatment (e.g., curing treatment) for forming the targeted layer, the overall light transmittance of the layered member represents a value of the overall light transmittance in the post-treatment state. Further, the overall light transmittance of the layered member is a value obtained by measuring in the thickness direction of the layered member (a direction as the stacking direction in the stacking body 100A).

### <Core material>

As another member that may be included in the louver film 100, the core material 40 is not particularly limited, but may be formed using a known core material.

The constituent material of the core material 40 is not particularly limited, but a resin is preferable. Further, a resin that transmits at least a portion of light of at least some wavelength of interest is more preferable. The resin as the material of the core material 40 may include, e.g., a cellulose resin such as cellulose diacetate, cellulose striacetate, or the like, a polyester resin such as polyethylene terephthalate (PET), polyethylene naphthalate, or the like, a (meth)acrylic resin such as polymethyl acrylate, polymethyl methacrylate, methyl methacrylate, methyl acrylate copolymer, or the like, a polystyrene resin, a polycarbonate resin, a polyolefin resins such as polyethylene, polypropylene, ethylene and propylene copolymers, a cyclic olefin resin such as cycloolefin polymer, a polyvinyl chloride resin, a polyamide resin such as nylon or aromatic polyamide, a polyimide resin, a polysulfone resin, a polyethersulfone resin, a polyether ether ketone resin, a polyphenylene sulfide resin, a polyvinyl alcohol resin, a polyvinylidene chloride resin, a polyvinylbutyral resin, a polyarylate resin, a polyoxymethylene resin, an epoxy resin, a silicone resin, or a polyurethane resin. Among them, a (meth)acrylic resin and a polycarbonate resin are preferable. As the resin, a single type or a combination of two or more types may be used.

The core material 40 may further contain an additive. Examples of the additive may include known additives used in the core material field.

The outer shape of the cross section in the plane orthogonal to the axial direction of the core material 40 and the outer diameter (maximum diameter when the shape is not circular) of the cross section in the plane orthogonal to the axial direction of the core material 40 are as described above. As described above, the core material 40 may have a hollow container or columnar shape.

Further, when the core material 40 is hollow, the hollow portion may be empty, and at least a portion of the hole portion 50 of the hollow core material 40 may be filled with any material. For example, the hole portion 50 of the hollow core material 40 may be filled with a material such as a functional layer F to be described below.

As the core material 40, a commercially available product or a manufactured product may be used. Although not particularly limited, the commercially available product may include acrylic pipes and polycarbonate pipes that may be purchased from Sugawara Crafts Co., Ltd.

Further, the stack 100A may be wound around without using the core material 40 to form the wound body 100B.

### <Functional layer>

As another member that may be included in the louver film 100, the functional layer F is not particularly limited, but may be formed using a known functional layer. As a functional layer F, a protective layer is preferable. The range of the preferred overall light transmittance of the protective layer is the same as the range of the preferred overall light transmittance of the functional layer F described above. When there are a plurality of protective layers, it is preferable that the overall light transmittance of each layer meets the above range. Further, a preferred method of measuring the overall light transmittance of the protective layer is also the same as the above-described method of measuring the overall light transmittance of the functional layer F.

When the functional layer F is a protective layer, the protective layer is not particularly limited, but preferably includes a resin. When the resin serving as the material of the protective layer is set to a desired thickness, a resin that transmits at least a portion of light of at least some wavelengths of interest is more preferable. As the resin serving as the material for the protective layer, a curable resin is preferable, an active energy ray curable resin is more preferable, and an ultraviolet curable resin is even more preferable. The resin as the material of the protective layer may include, e.g., a cellulose resin such as cellulose diacetate, cellulose striacetate, or the like, a polyester resin such as polyethylene terephthalate (PET), polyethylene naphthalate, or the like, a (meth)acrylic resin such as polymethyl acrylate, polymethyl methacrylate, methyl methacrylate, methyl acrylate copolymer, or the like, a polystyrene resin, a polycarbonate resin, a polyolefin resins such as polyethylene, polypropylene, ethylene and propylene copolymers, a cyclic olefin resin such as cycloolefin polymer, a polyvinyl chloride resin, a polyamide resin such as nylon or aromatic polyamide, a polyimide resin, a polysulfone resin, a polyethersulfone resin, a polyether ether ketone resin, a polyphenylene sulfide resin, a polyvinyl alcohol resin, a polyvinylidene chloride resin, a polyvinylbutyral resin, a polyarylate resin, a polyoxymethylene resin, an epoxy resin, a silicone resin, or a polyurethane resin. Examples of the ultraviolet curable resin may include a (meth)acrylic resin, an epoxy resin, and a polyurethane resin. As the resins, a single type or a combination of two or more types may be used.

The protective layer may further contain an additive. Although not particularly limited, the additive may be additives used in the resin film field, the optical film field, and the functional layer field.

As the protective layer, a commercially available product or a manufactured product may be used. When the protective layer is manufactured, as a commercially available product of the protective layer forming material is not particularly limited, but an ultraviolet (UV) cured resin Sanrad (registered trademark) TF-01 from Sanyo Kasei Kogyo Co., Ltd. may be used.

### [Method for manufacturing louver film]

The method for manufacturing the louver film 100 is not particularly limited. However, as a method for manufacturing the louver film 100, a method including a winding process of manufacturing a wound body 100B by winding a stack 100A including a light transmitting layer material layer 110 and a light blocking layer material layer 120 and a cutting process of forming a louver portion 30 by cutting the wound body 100B in a direction crossing a winding axis direction of the wound body 100B is preferable. Accordingly, another embodiment of the present invention may be said to relate to a method for manufacturing a louver film 100 including a louver portion 30, including a winding process of manufacturing a wound body 100B by winding a stack 100A including a material layer 110 of a light transmitting layer for forming a light transmitting portion 10 and a material layer 120 for a light blocking layer for forming a light blocking portion 20 and a cutting process of forming the louver portion 30 having a wound structure by cutting the wound body 100B in a direction crossing a winding axis direction of the wound body 100B.

It is preferable that the method for manufacturing the louver film 100 includes a stack forming process of forming the stack 100A including the light transmitting layer material layer 110 and the light blocking layer material layer 120 before the winding process.

When the light transmitting layer material layer 110, as it is, or at least a portion thereof, is a layered member before treatment for forming the light transmitting layer, it becomes a light transmitting layer constituting the light transmitting portion 10 through such treatment (e.g., curing treatment). When the light blocking layer material layer 120, as it is, or at least a portion thereof, is a layered member before treatment for forming the light blocking layer, it becomes a light blocking layer constituting the light blocking portion 20 through such treatment (e.g., curing treatment). Accordingly, the louver portion 30 of the louver film 100 is rendered to have a configuration with a wound structure in a state in which the stack 100A including the light transmitting layer and the light blocking layer is wound.

Further, when the stack 100A is formed, the light transmitting portion 10 formed of the light transmitting layer material layer 110 may include an adhesive layer having a light transmitting property, and the light blocking portion 20 formed of the light blocking layer material layer 120 may include an adhesive layer having a light blocking property. The adhesive layer constitutes the light transmitting layer material layer 110 as the light transmitting layer functional layer 110b when it has a light transmitting property, and constitutes the light blocking layer material layer 120 as the light blocking layer functional layer when the adhesive layer has a light blocking property. Accordingly, the louver portion 30 of the louver film 100 is rendered to have a configuration with a wound structure in a state in which the stack 100A including the light transmitting layer, the light blocking layer, and the adhesive layer is wound.

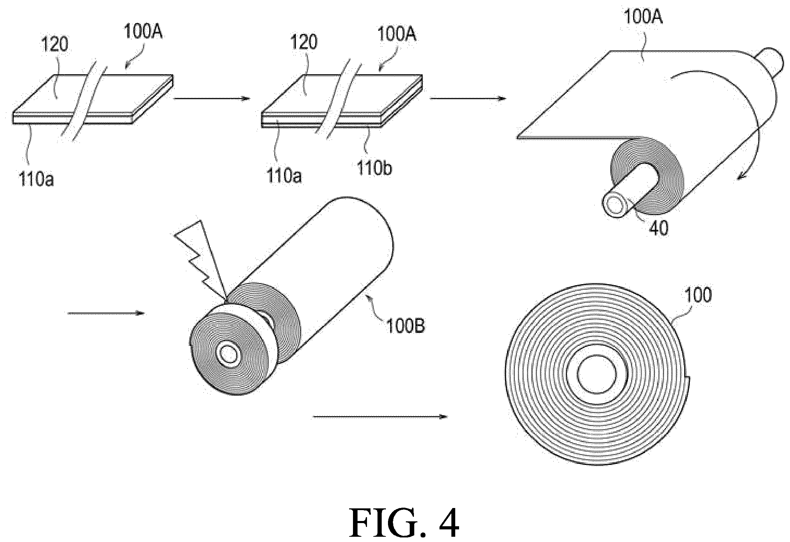

Next, a method for manufacturing a louver film 100 is described with reference to FIG. 4. However, FIG. 4 relates to a method for manufacturing a louver film 100 according to an embodiment of the present invention, and the method for manufacturing the louver film 100 according to the present invention is not limited to the configurations described by the drawings.

### 〈Process of forming stack〉

It is preferable that the method for manufacturing the louver film 100 includes a process of stacking the light transmitting layer material layer 110 and the light blocking layer material layer 120. In the above process, other members may be further stacked in addition to these, but it is preferable to stack only the light transmitting layer material layer 110 and the light blocking layer material layer 120. For example, as illustrated in FIG. 4, first, the light transmitting layer material layer 110 and the light blocking layer material layer 120 constituting the stack 100A are stacked.

Further, if necessary, as a part of at least one member selected from the group consisting of the light transmitting layer material layer 110 and the light blocking layer material layer 120, it is preferable to form at least one (preferably, an adhesive layer) selected from the group consisting of a pressure sensitive adhesive layer and an adhesive layer, as the adhesive layer. As at least one selected from the group consisting of the pressure sensitive adhesive layer and the adhesive layer is disposed on one or two opposite surfaces of at least one member selected from the group consisting of the light transmitting layer material layer 110 and the light blocking layer material layer 120, the adhesiveness or adhesion between the stacks 100A is enhanced. As a result, it is easier to form the wound body 100B, and it is possible to form a stronger and more stable wound body 100B.

Further, when the core material 40 is used, the adhesiveness or adhesion between the stack 100A and the core material 40 and the adhesiveness or adhesion between the stacks 100A may be enhanced, the wound body 100B may be more easily formed, and a stronger and more stable wound body 100B may be formed.

The method for forming the stack 100A including the light transmitting layer material layer 110 and the light blocking layer material layer 120 is not particularly limited, and a known method for forming the stack according to the configuration thereof may be used.

It is not particularly limited as a method for manufacturing the stack 100A. For example, when the light transmitting layer film 110a constitutes at least a portion of the light transmitting layer material layer 110, a light transmitting layer functional layer constituting the light transmitting layer material layer 120 may be formed on one surface of the light transmitting layer film 110a, and if necessary, a light transmitting layer functional layer 110b constituting a portion of the light transmitting layer material layer 110 may be formed on the other surface of the film. For example, when the light blocking layer film constitutes at least a portion of the light blocking layer material layer 120, the light transmitting layer functional layer 110b constituting the light transmitting layer material layer 110 may be formed on one surface of the light blocking layer film, and if necessary, the light blocking layer functional layer constituting a portion of the light blocking layer material layer 120 may be formed on the other surface of the film. Among them, as illustrated in FIG. 4, it is preferable to form a light blocking layer functional layer, which is the light blocking layer material layer 120, on one surface of the light transmitting layer film 110a constituting a portion of the light transmitting layer material layer 110, and to form the light transmitting layer functional layer 110b constituting a portion of the light transmitting layer material layer 110 on the other surface of the light transmitting layer film 110a. The description of the light transmitting layer film 110a, the light transmitting layer functional layer 110b, the light blocking layer film, and the light blocking layer functional layer is the same as the above description.

When the light transmitting layer functional layer 110b and the light blocking layer functional layer each are formed, the method for forming the functional layer on the film is not particularly limited, and for example, a known method for forming the functional layer may be used. Examples of the method for forming the light transmitting layer functional layer 110b and the light blocking layer functional layer may include, e.g., a deposition method, a sputtering method, an application method, an ion plating method, a chemical deposition method (CVD method), and other known methods. Among them, an application method such as a coating method, a dipping method, and a spray method is preferable, and a coating method is more preferable.

When the light transmitting layer functional layer 110b and the light blocking layer functional layer each are formed according to the application method, it is preferable that the material for forming the light transmitting layer functional layer 110b and the material for forming the light blocking layer functional layer are used in the form of a solution or a dispersing solution. The solvent or dispersion medium used in the solution or dispersing solution is not particularly limited. Examples of the solvent or the dispersion medium include, e.g., water. Further, it may be, e.g., esters such as ethyl acetate or n-butyl acetate, aromatic hydrocarbons such as toluene or benzene, aliphatic hydrocarbons such as n-hexane or n-heptane, alicyclic hydrocarbons such as cyclohexane or methylcyclohexane, and organic solvents such as ketones such as methyl ethyl ketone and methyl ISO butyl ketone. Among them, an organic solvent is preferable, esters and ketones are more preferable, and ethyl acetate and methyl ethyl ketone are even more preferable. As the solvent or the dispersion medium, a single type or a combination of two or more types may be used. The concentrations (concentrations of components other than the solvent or the dispersion medium) of the active components of the light transmitting layer functional layer 110b and the light blocking layer functional layer are not particularly limited, and may be appropriately selected according to desired characteristics.

In the formation of the light transmitting layer functional layer 110b according to the application method and the formation of the light blocking layer functional layer according to the application method, it is preferable to perform drying after applying such a forming material. The drying method and drying conditions are not particularly limited, and suitable conditions may be appropriately selected.

In an embodiment of the present invention, the light transmitting layer material layer 110 and the light blocking layer material layer 120 may each be a member having a predetermined length or a long member, but preferably, each of the material layers 110 and 120 may be a long member. In an embodiment of the present invention, it is preferable that the stack 100A including the light transmitting layer material layer 110 and the light blocking layer material layer 120 is a long member. The light transmitting layer material layer 110 or the light blocking layer material layer 120 constituting the stack 100A may be formed of one long member, or may be a component having one long shape formed by preparing a plurality of members with a predetermined length and brining their adjacent cross sections in contact with each other. The cross-sectional shape of the long stack 100A in the length direction is not particularly limited, but it is preferable to have a surface shape (a smooth plane) perpendicular to the length direction.

### 〈Winding process〉

The method for manufacturing the louver film 100 includes a process of forming the wound body 100B by winding the stack 100A including the light transmitting layer material layer 110 and the light blocking layer material layer 120. As illustrated in FIG. 4, in the winding process, the stack 100A formed by the stack forming process is wound. The method for forming the wound body 100B is not particularly limited, and for example, a known method for forming a wound body may be used.

As described above, the stack 100A including the light transmitting layer material layer 110 and the light blocking layer material layer 120 may be formed by stacking layers including the light transmitting layer material layer 110 and the light blocking layer material layer 120 at the same time as the winding, or may be formed before the winding. In the winding process, it is preferable to wind the stack 100A in which the light transmitting layer material layer 110 and the light blocking layer material layer 120 are stacked, which are previously formed before the winding.

The wound body 100B may or may not include a core material 40. In other words, the wound body 100B may be formed by winding the stack 100A around the core material 40, or by winding only the stack 100A without using the core material 40. Among them, the wound body 100B is preferably formed by winding the stack 100A around the core material 40.

The winding method for the stack 100A is not particularly limited. When the stack 100A is obtained before winding, e.g., a method for winding one long stack 100A around the winding center C1 to be layered in a roll shape may be used. For example, a method for winding a plurality of stacks 100A so that the plurality of stacks 100A are arranged in a concentric circle with respect to the winding center C1 may be used.

As the winding method for the stack 100A, when the stack 100A is formed simultaneously with the winding, e.g., a method for winding a long stack 100A in a state in which a long light transmitting layer material layer 110 and a long light blocking layer material layer 120 overlap each other, around the winding center C1 to be layered in a roll shape may be used. For example, a method for alternately winding a plurality of light transmitting layer material layers 110 and a plurality of light blocking layer material layers 120 so that the plurality of light transmitting layer material layers 110 and the plurality of light blocking layer material layers 120 are alternately disposed in a concentric shape around the winding center C1 may be used.

The stack 100A may be easily wound by using the core material 40. The winding method for the stack 100A around the core material 40 is not particularly limited. When the stack 100A is obtained before winding, e.g., a method for winding one long stack 100A around the core material 40 to be layered in a roll shape around the core material 40 may be used. The winding method illustrated in FIG. 4 is an example of such a winding method. For example, a method for winding a plurality of stacks 100A around the core material 40 so that the plurality of stacks 100A are arranged in a concentric circle around the core material 40 may be used.

When the stack 100A is formed simultaneously with the winding using the core material 40, e.g., a method for winding a long stack 100A in a state in which a long light transmitting layer material layer 110 and a long light blocking layer material layer 120 overlap each other, around the core material 40 to be layered in a roll shape may be used. For example, a method for alternately winding a plurality of light transmitting layer material layers 110 and a plurality of light blocking layer material layers 120 around the core material 40 so that the plurality of light transmitting layer material layers 110 and the plurality of light blocking layer material layers 120 are alternately disposed in a concentric shape around the core material 40 may be used.

In the winding method using the core material 40, the stack 100A is wound around the core material 40 by winding each of the stack 100A, or the light transmitting layer material layer 110 and the light blocking layer material layer 120 around the core material 40.

The wound body 100B is preferably a wound body in which one long stack 100A is wound around the core material 40 to be layered in a roll shape as illustrated in FIG. 4.

The winding process may use a known winding device. The winding process is not particularly limited. For example, each of the light transmitting layer material layer 110 and the light blocking layer material layer 120 is conveyed by, e.g., a guide roll, and may be wound using, e.g., a winding roll while being stacked. For example, the stack 100A including the light transmitting layer material layer 110 and the light blocking layer material layer 120 may be wound using, e.g., a winding roll while being conveyed by, e.g., a guide roll. Among them, it is particularly preferable to wind the stack 100A in which the light transmitting layer material layer 110 and the light blocking layer material layer 120 have previously been stacked, using, e.g., a winding roll while conveying the stack 100A by, e.g., a guide roll.

### 〈Cutting process〉

The method for manufacturing the louver film 100 includes a process of cutting the wound body 100B obtained by the winding process in a direction crossing the winding axis direction. A louver portion 30 having the wound structure is formed through the cutting process. The cutting method of the wound body 100B obtained by the winding process is not particularly limited, and for example, a known method for cutting a member may be used. Examples of the cutting method of the wound body 100B include a method using a band saw, a saw, a cutter, a trimming cutter, a laser, an ultrasonic cutter, a water cutter, or the like.

The cutting direction is not particularly limited as long as it is a direction crossing the winding axis direction of the wound body obtained by the winding process, but it is preferable that it is a direction orthogonal to the winding axis direction.

A plurality of winding bodies after cutting may be obtained from the wound body 100B obtained by one winding process by performing cutting several times in the direction crossing the winding axis direction. The cut interval of the wound body 100B is appropriately determined according to the desired thickness of the louver portion 30 of the louver film 100.

When the core material 40 is not used in the winding process (when the wound body 100B does not include the core material 40), the post-cut member obtained by the cutting process may include, e.g., the louver portion 30.

When the core material 40 is used in the winding process (when the wound body 100B includes the core material 40), the post-cut member obtained by the cutting process may include, e.g., a member including the core material 40 and the louver portion 30. Here, the member including the core material 40 and the louver portion 30 may be, e.g., a member including the core material 40 and the louver portion 30 having a wound structure in a state in which the post-cut stack 100A is wound around the core material 40.

The manufacturing method of the louver film 100 may include, at least, a "winding process" and a "cutting process" as described above, and may manufacture the louver film 100 by performing each process in the order thereof. The manufacturing method of the louver film 100 includes a "stack forming process", a "winding process", and a "cutting process", and preferably manufactures the louver film 100 by performing each process in the order thereof.

### 〈Other processes〉

The method for manufacturing the louver film 100 may further include a process other than the above-described processes. The other processes are not particularly limited. The other processes may include, e.g., a process of curing the wound body 100B obtained by the winding process (curing process), a process of forming a functional layer F on at least one cut surface of the post-cut member obtained by the cutting process (functional layer forming process), and a process of stacking a substrate on at least one surface of the post-cut member obtained by the cutting process (substrate stacking process).

When at least a portion of the light transmitting layer material layer 110 is a layered member before curing treatment having curability and/or at least a portion of the light blocking layer material layer 120 is a layered member before curing treatment having curability, it is preferable that the method for manufacturing the louver film 100 further includes a curing process.

The curing process may be performed at any timing before the stack forming process, between the stack forming process and the winding process, between the winding process and the cutting process, or after the cutting process. Among them, the curing process is preferably performed between the winding process and the cutting process. In this case, the object to be cut by the cutting process becomes the wound body 100B after the curing treatment. The curing process is preferably performed when an adhesive layer is present as a part of at least one member selected from the group including the light transmitting layer material layer 110 and the light blocking layer material layer 120. The curing method and the curing conditions are not particularly limited, and suitable conditions may be appropriately selected.

The method for manufacturing the louver film 100 according to a preferred embodiment of the present invention further includes a curing process in which at least one selected from the group including the light transmitting layer material layer 110 and the light blocking layer material layer 120 includes a layered member having curability, and after the winding process and before the cutting process, the layered member having curability in the wound body 100B is cured.

It is preferable that the method for manufacturing the louver film 100 further includes a process of forming the functional layer F (functional layer forming process).

The functional layer F (preferably a protective layer) may be formed on one cut surface of the post-cut member obtained by cutting from the wound body 100B, or may be formed on two opposite cut surfaces of the member. For example, the functional layer F (preferably, a protective layer) may be formed on one or two opposite cut surfaces of the member including the louver portion 30 or including the core material 40 and the louver portion 30 having the wound structure in a state in which the post-cut stack 100A is wound around the core material 40. Among them, it is preferable that a protective layer is formed on two opposite cutting surfaces of the post-cut member obtained by cutting from the wound body 100B.

The method for forming the functional layer F (preferably a protective layer) is not particularly limited, and for example, a known method for forming a functional layer may be used. Examples of the method for disposing the material for forming the functional layer F include a deposition method and an application method. Among them, an application method such as an imprint method, a coating method, a dipping method, and a spray method is preferable, and an imprint method is more preferable.

Further, drying may be performed after application, as necessary.

Preferred examples of the protective layer and the protective layer forming material have been described above. When the protective layer forming material is an active energy ray curable resin (preferably an ultraviolet curable resin), it is preferable to form the protective layer by the following method. First, the curable resin and the release film are stacked on one surface (cut surface) of the post-cut member obtained by cutting from the wound body 100B so that the curable resin and the release film are sequentially disposed as viewed from the surface of the post-cut member. Then, the active energy ray is irradiated from the release film side to cure the active energy ray curable resin. Then, if necessary, the release film is peeled to form a protective layer.

Although not particularly limited, the release film may be, e.g., a known film. As the release film, the film exemplified in the light transmitting layer film 110a in the description of the light transmitting layer material layer 110 may be used. As the release film, a resin film is preferable, a polyester film is more preferable, and a PET film is even more preferable. As the release film, a commercially available product or a manufactured product may be used. Although not particularly limited, the commercially available product may be, e.g., the PET film Lumira (registered trademark) T60 from Toray Co., Ltd.

Further, when the core material 40 is hollow, the hollow portion may be empty, and at least a portion of the hole portion 50 of the hollow core material 40 may be filled with the same material as the functional layer F (e.g., the protective layer) while simultaneously forming the functional layer F (e.g., the protective layer).

### [Louver film including optical element and method for manufacturing the same]

It is preferable that the louver film 100 further includes an optical element. It is preferable that the louver film 100 further includes an optical element, and the wound structure of the louver portion 30 is disposed around the optical element to surround the optical element. In this louver film 100, it may be said that the optical element is disposed inside the wound structure of the louver portion 30 at plan view. Further, the optical element and the louver unit 30 may be in contact with each other, or another member may intervene therebetween.

A method for manufacturing a louver film 100 further including an optical element, in which the wound structure of the louver portion 30 is disposed around the optical element to surround the optical element, is not particularly limited. For example, a method for manufacturing the louver film 100 may include disposing the wound structure of the louver portion 30 around the optical element to surround the optical element. For example, the method for manufacturing the louver film 100 may further include disposing the wound structure of the louver portion 30 to surround the optical element around the optical element. A method for disposing the wound structure of the louver unit 30 to surround the optical element around the optical element is not particularly limited. For example, a method for attaching an optical element manufactured by a known method may be the method. For example, when the louver film 100 includes the core material 40, a method of using the core material 40 as the optical element by patterning through pressing molds on the core material 40 may be the method. For example, when the louver film 100 includes the core material 40, if there is a material (functional layer F) filling the hole portion 50 of the core material 40, a method of using the hole portion 50 of the core material 40 as the optical element by patterning through pressing molds on, preferably, the same material as the functional layer F, particularly preferably the same material as the protective layer) may be the method.

The optical element is not particularly limited. For example, a known optical element may be the optical element. Specific examples of optical elements may include various lenses such as a spherical lens, an aspheric lens, and a micro lens, various lens arrays such as of spherical lenses, aspheric lenses, and micro lenses, prisms, prism arrays, gratings, reflection millers, light diffusion plates, anti-reflection films, phase difference elements, phase difference compensation elements, polarizing plates, color filters, bandpass filters, and color conversion elements.

### [Device and method for manufacturing the same]

It is preferable that the louver film 100 is included and used as a part of the device. Therefore, another embodiment of the present invention relates to a device including the louver film 100. A method for manufacturing the device is not particularly limited, but may be, e.g., a method of including the louver film 100 as a part of the device. For example, a method including manufacturing the louver film 100 by the manufacturing method of the louver film 100 and including the louver film 100 as part of the device may be the method. Accordingly, another embodiment of the present invention may be a method including, including the louver film 100 as part of the device, as the manufacturing method of the device. Another embodiment of the present invention may be a method including manufacturing the louver film 100 as the above-described manufacturing method and including the louver film 100 as part of the device, as the manufacturing method of the device. The method of including the louver film 100 in the device is not particularly limited, and may include, e.g., a known method of including a member in a device.

Although not particularly limited, the device is preferably a device having a function of receiving and/or emitting light, and more preferably a device having a display function. Further, even more preferably, it is a smart device such as a smartphone, a smart watch, a tablet terminal, or a wearable terminal. Further, it is preferable that the smart device has a function of managing health information such as photoplethysmography (PPG), and requires accurate sensing to implement the function. The PPG device primarily uses a method of obtaining information such as pulses by radiating LED light and monitoring reflected light from blood vessels. The louver film 100 and the louver film 100 manufactured by the manufacturing method may control the traveling direction of transmitted light to a predetermined angle with respect to a plurality of directions. Accordingly, the signal-to-noise ratio S/N may be enhanced using the prism array and the louver film 100 in the present method. Further, in this method, the louver films 100 may remove stray light. As such, from the viewpoint of obtaining more accurate information, a smart device capable of measuring by PPG is particularly preferable as the device.

### [Embodiment]

The effects of the present invention are described using embodiments and comparative examples as follows. However, the technical scope of the present invention is not limited to the following embodiments.

### <Preparation of rubber film>

### [Manufacture of sample]

Samples according to embodiments (embodiments 1 to 6) and a sample according to a comparative example (comparative example 1) were manufactured according to the following processes.

### (Process of forming stack)

A long transparent film (Toyobo Co., Ltd. PET film Cosmoshine (registered trademark) A4360, thickness 38µm, 50µm) or Fujifilm Co., Ltd. TAC film Fuji-TAC (registered trademark) TG40UL, thickness 40µm) were prepared.

Subsequently, two types of coating solutions for forming a black layer (black coating solution 1 and black coating solution 2) forming a black layer were prepared. Black coating solution 1 was obtained by dispersing 25wt% of black ink (Paliotol (registered trademark) Black L 0080 (BASF)) to 75wt% of thermosetting epoxy resin (one obtained by adding and mixing 1wt% of a promoter (Seikuol TDMP (Seiko Kagaku Co., Ltd.) to an epoxy resin (denacol EX-321 (Nagase Chemtex Co., Ltd.), refractive index: 1.46): curing agent (QE340M (Toray Fine Chemical), refractive index: 1.50) = 48:52 (mass ratio), and mixing and stirring the mixture with ethyl acetate so that the solid content concentration is 50 mass%. Black coating solution 2 was obtained by dispersing 25wt% of black ink (Paliotol (registered trademark) Black L 0080 (BASF)) to 75wt% of thermosetting epoxy resin (one obtained by adding and mixing 1wt% of a promoter (Seikuol TDMP (Seiko Kagaku Co., Ltd.) to an epoxy resin (bisphenol A type epoxy resin RE310S (Nippon Kagaku), refractive index: 1.57): curing agent (QE340M (Toray Fine Chemical Co., Ltd.), refractive index: 1.50) = 55:45 (mass ratio), and mixing and stirring the mixture with ethyl acetate so that the solid content concentration is 50 mass%. The coating solution for forming a black layer (black coating solution 1 or black coating solution 2) was applied on one surface of the transparent film having the thickness of the film described in the "thickness of the transparent film" of Table 1 below to the thickness of the dried film described in the "thickness of the black layer" of Table 1 below using a bar coater, and drying was performed at 80°C for 1 minute to form a black layer. Accordingly, a long stack of the transparent film and the black layer stack was obtained.

Subsequently, two types of epoxy adhesives (adhesive 1 and adhesive 2) were prepared. For adhesive 1, a coating solution for forming the adhesive layer, which becomes adhesive 1, was obtained by adding and mixing 1wt% of a promoter (Seikuol TDMP (Seiko Kagaku Co., Ltd.)) to an epoxy resin (denacol EX-321 (Nagase Chemtex Co., Ltd.), refractive index: 1.46): a curing agent (QE340M (Toray Fine Chemical Co., Ltd.), refractive index: 1.50) = 48:52 (mass ratio), and mixing and stirring the obtained mixture with methyl ethyl ketone so that the solid content concentration was 80%. For adhesive 2, a coating solution for forming the adhesive layer, which becomes adhesive 2, was obtained by adding and mixing 1wt% of a promoter (Seikuol TDMP (Seiko Kagaku Co., Ltd.)) to an epoxy resin (bisphenol A-type epoxy resin RE310S (Nippon Kagaku), refractive index: 1.57): a curing agent (QE340M (Toray Fine Chemical Co., Ltd.), refractive index: 1.50) = 55:45 (mass ratio), and mixing and stirring the obtained mixture with methyl ethyl ketone so that the solid content concentration was 80%. The coating solution for forming an adhesive layer (adhesive 1 or adhesive 2) was applied on a surface of the transparent film side in the obtained long, stack of the transparent film and the black layer to the post-curing film thickness described in the "thickness of the transparent film" of Table 1 below using a bar coater, and drying was performed at 80°C for 1 minute to form an adhesive layer. In this way, a long stack in which the adhesive layer, the transparent film, and the black layer were sequentially stacked was obtained.

The refractive index of the transparent film (light transmitting layer), the black layer (light blocking layer), and the adhesive layer (adhesive layer) constituting the stack was evaluated in a test method compliant with JIS K 7142 using the Abbe refractometer DR-M2 (Atago Co., Ltd.). Further, for the black layer (light blocking layer) and the adhesive layer (adhesive layer) other than the transparent film serving as the light transmitting layer, the forming material (black coating solution 1, black coating solution 2, adhesive 1, adhesive 2) of each layer was applied to the PET film (Lumira (registered trademark) T60 (Toray Co., Ltd.) so that the thickness of the dried film was about 50µm, and the coating film was manufactured under the above curing conditions, and the result peeled off from the PET film was used as an evaluation sample to measure the refractive index.

### 〈Winding process〉

One long stack in which the adhesive layer, the transparent film, and the black layer obtained above were sequentially stacked was wound on a core material (purchased from Sugawara Crafts Co., Ltd., a hollow cylindrical polycarbonate pipe having an outer diameter of 6 mm) to have an outer diameter of 14 mm so that the adhesive layer is disposed on the core material side to obtain a wound body. The obtained wound body includes the core material, and the wound body is a wound body in which one long stack is wound around the core material so that one long stack is wound to be layered to overlap in a roll shape. Further, the cross section in a plane orthogonal to the axial direction of the core material is circular.

### (Curing process)

The wound body obtained above was placed in an oven at 80°C for 1 hour to cure the adhesive to obtain a post-curing wound body.

### (Cutting process)

The post-curing wound body obtained above was cut to have a predetermined thickness in a direction orthogonal to the winding axis direction for each core material using a rotary microtome RX-860 of Yamato Koki Industrial Co., Ltd. to obtain a post-cut member including the core material and the louver portion.

The obtained louver portion has a wound structure in a state in which one long stack is wound around the core material so that one long stack is wound to be layered to overlap in a roll shape. This wound structure is a wound structure in a state in which one long stack is wound around the core material, with the winding axis matching the axial direction of the core material as the winding center. In the obtained louver portion, when the adhesive layer has a light transmitting property, the transparent film and the adhesive layer after curing constitute a light transmitting portion as a light transmitting layer, and the black layer constitutes a light blocking portion as a light blocking layer.

The thickness of the obtained louver portion was measured using the thickness gauge high density type of Mitutoyo Co., Ltd. More specifically, the thicknesses at four specific points on the louver portion with respect to the winding center in the post-cut member were measured, and the average value of the same was set to the thickness of the louver portion.

FIG. 6 is a schematic view illustrating a measurement position of a thickness of a louver portion included in a louver film according to an embodiment of the present invention. As shown in FIG. 6, the four specific points for measuring the thickness were set to four specific points on the louver portion with respect to the winding center C1 at plan view. The four specific points (measurement positions P1) where measurement is performed were set to any position on the louver portion 30 from the position where two axes (X axis and Y axis) cross each other, on the two axes, (the position matches the winding center C1) toward the outer circumference by a predetermined distance, in a orthogonal coordinate system set to pass through the winding center C1 at plan view of the louver portion 30 disposed around the core material as illustrated in FIG. 6. Further, " + X", "X", " + Y", and "Y" in the drawings each represent a direction of the orthogonal coordinate system.

### (Process for forming protective layer)

The post-cut member was laminated with the UV curable resin and the PET film so that the UV curable resin (Sanyo Kasei Kogyo Co., Ltd. UV curable resin Sanrad (registered trademark) TF-01) and the PET film (Toray Co., Ltd. PET film Lumira (registered trademark) T60) were sequentially disposed from the post-cut member side, on two opposite cut surfaces of the post-cut member obtained in the cutting process. Then, ultraviolet rays were irradiated from one side of the PET film using a metal halide lamp under a condition of an accumulated light amount of 1000 mJ/cm2 (365 nm) to cure the UV curable resin to form a double-sided PET film-attached louver film. Then, the PET film on two opposite sides of the louver film with the double-sided PET film was peeled off to complete the louver film (a louver film having protective layers on two opposite sides).

The obtained louver film includes a louver portion, a core material, and a protective layer. Further, in the obtained louver film, the hole portion of the hollow core material was filled with the same material as the protective layer before the protective layer formation process.

The protective layers on two opposite sides were 5µm thick. The film thickness of the protective layer was calculated by measuring the thickness of the louver film in the same manner as the thickness of the louver portion, and subtracting the thickness of the louver portion from the thickness.

When the schematic structure of the louver film obtained above is described using the schematic plan view of FIG. 1 and the schematic cross-sectional view of FIG. 2, the functional layer F becomes a protective layer, and the hole portion 50 of the hollow core material 40 is filled with the same material as the protective layer. Further, the light transmitting layer constituting the light transmitting portion 10 is formed of a transparent film and a post-curing adhesive layer, and the light transmitting layer material layer 110 is formed of an adhesive layer and a transparent film. Further, the light blocking layer constituting the light blocking portion 20 is formed of a black layer, and the light blocking layer material layer 120 is formed of a black layer.

Further, FIGS. 1 and 2 are schematic views for description, and details such as the number of turns of the wound structure in FIG. 1, the start and end positions and shape of the winding in FIG. 1, and the dimensional ratio of each portion in FIGS. 1 and 2 become a structure according to each actually obtained louver film.

The configurations of embodiments 1 to 6 and comparative example 1 are shown in Table 1 below.

**[Table 1]**

| Sample name | | embodi ment 1 | embodi ment 2 | embodi ment 3 | embodi ment 4 | embodi ment 5 | embodi ment 6 | compara tive example 1 |
|---|---|---|---|---|---|---|---|---|
| configura tion | thicknes s (*µ*m) of transpar ent film | 38 | 38 | 38 | 50 | 40 | 40 | 40 |
| | types of transpar ent film | PET | PET | PET | PET | TAC | TAC | TAC |
| | refractiv e index of transpar ent film | 1.65 | 1.65 | 1.65 | 1.65 | 1.49 | 1.49 | 1.49 |
| | thicknes s (*µ*m) of adhesiv e layer | 10 | 5 | 5 | 5 | 15 | 10 | 5 |
| | type of adhesiv e layer | adhesive 1 | adhesive 1 | adhesive 2 | adhesive 2 | adhesive 2 | adhesive 2 | adhesive 1 |
| | refractiv e index of adhesiv e layer | 1.49 | 1.49 | 1.56 | 1.56 | 1.56 | 1.56 | 1.49 |
| | adhesiv e layer thicknes s (*µ*m) | 3 | 3 | 7 | 10 | 3 | 3 | 3 |
| | refractiv e index of black layer | 1.56 | 1.56 | 1.49 | 1.49 | 1.56 | 1.49 | 1.49 |
| | thicknes s (*µ*m) of light transmit ting layer material layer | 48 | 43 | 43 | 55 | 55 | 50 | 45 |
| | thicknes s (*µ*m) of light blockin g layer material layer | 3 | 5 | 7 | 10 | 3 | 3 | 3 |
| | thicknes s (*µ*m) of louver portion | 140 | 115 | 160 | 150 | 130 | 150 | 115 |
| Remarks | | The present inventio n | The present inventio n | The present inventio n | The present inventio n | The present inventio n | The present inventio n | compara tive product |

### <Evaluation of louver film>

The evaluation results of embodiments 1 to 6 and comparative example 1 produced are shown.

### [Ratio of height L2 of light blocking portion to width L1 of light transmitting portion]

For embodiments 1 to 6, and comparative example 1 obtained above, the ratio L2/L1 of the height L2 of the light blocking portion corresponding to the thickness of the louver portion to the width L1 of the light transmitting portion along the direction from the winding center C1 toward the outer circumferential edge in the plane orthogonal to the thickness direction of the louver portion was calculated.

Further, in embodiments 1 to 6 and comparative example 1 obtained above, the film thicknesses of the post-curing adhesive layer, the transparent film, and the black layer each are almost the same in the state when the film thickness is measured and in the state in the wound structure of the louver portion of the obtained louver film. Accordingly, the width L1 of the light transmitting portion is the thickness of the light transmitting layer, which matches the sum of the thickness of the light transmitting layer material layer, i.e., the thickness of the adhesive layer, and the thickness of the transparent film described above.

### [Ratio of area of light blocking part to total area of surface of louver portion]

For embodiments 1 to 6, and comparative example 1 obtained above, at plan view of the louver portion, the ratio (%) of the area of the light blocking portion to the total area of the surface (cut surface) of the louver portion (a plane orthogonal to the thickness direction of the louver portion) (in Table 1, simply referred to as "the ratio of the area of the light blocking layer") was calculated.

### [Measurement of angle (viewing angle) and transmittance of transmitted light]

For embodiments 1 to 6, and comparative example 1 obtained above, the backlight was turned on in a backlight only state, and the angle (viewing angle) of light and the luminance (1) (unit: cd/m2) at each angle were measured using a Conoscope (Conoscope of Autronic-Melchers). The louver film obtained above was placed on the backlight and the backlight was turned on to measure the angle (viewing angle) of light and the luminance 2 (unit: cd/m2) at each angle in the same manner.

Then, for each angle, the transmittance (light transmittance) of light passing through the louver film was calculated by calculating the transmittance (light transmittance) (unit:%) = luminance (2) / luminance (1) × 100 of the light passing through the louver film.

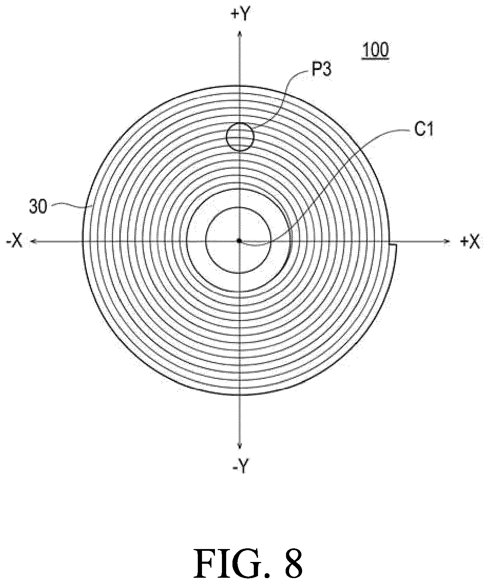

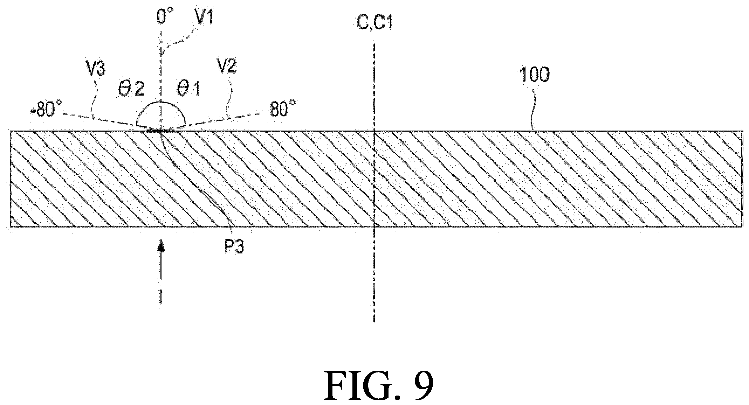

FIGS. 8 and 9 are schematic views illustrating a measurement position of an angle and transmittance of transmitted light for a louver film according to an embodiment of the present invention. As illustrated in FIG. 8, the measurement positions of embodiments 1 to 6 and comparative example 1 were set to one specific point of the position where the louver portion in the louver film is present, with respect to the winding center C1 at plan view. The one specific point (measurement position P3) where measurement is performed is the position of two directions perpendicular to each other on the louver portion 30 from the position where two axes (X axis and Y axis) cross each other, on the two axes, (the position matches the winding center C1) toward the outer circumference by a predetermined distance, in a orthogonal coordinate system set to pass through the winding center C1 at plan view of the louver film 100 including the core material as illustrated in FIG. 8. Further, " + X", "X", " + Y", and "Y" in the drawings each represent a direction of the orthogonal coordinate system.

At the measurement position P3, as illustrated in FIG. 9, the virtual line V1 extending from the surface of the louver film 100 in the thickness direction (vertical direction) was used. Further, in FIG. 9, I denotes the incident light. The measurement was performed for the following angle:
0° which is the position of the virtual line V1;
Edge θ1 (angle θ1 is a positive angle) formed by the direction (0° direction) of the virtual line V1 and a virtual line V2 crossing the virtual line V1 at the measurement position P3 and extending toward the winding center C1 side;
Angle θ2 (angle θ2 is a minus angle) formed by the direction (0° direction) of the virtual line V1 and a virtual line V3 crossing the virtual line V1 at the measurement position P3 and extending toward the outer circumference side of the louver film which is opposite to the winding center C1 side.

Further, the angular range of angle θ1 when the position on the virtual line V1 is set to 0° is set to a range of 0° to 80°, and the angular range of angle θ2 when the position on the virtual line V1 is set to 0° is set to a range of -80° to 0°. In other words, the measurement angle was set to a range of ±80° (-80°≤measurement angle≤80°) with respect to 0° when the position on the virtual line V1 was set to 0°.

In Table 2 below, the transmittance of one sample is denoted as "B/A" (unit:°) for θ1 (+A°) and the angle (-B°) of θ2.

The measurement result in the thickness direction (vertical direction, 0° direction) of the louver film 100 at the measurement position P3(+Y) in the +Y direction as viewed from the winding center C1 shown in FIG. 8 is "transmittance (P3(+Y)) in the angle 0° direction" (unit:%);
Angle θ1 and angle θ2 where the transmittance is 75% (a value of 3/4 of the transmittance of the incident angle 0°) with respect to the transmittance in the angle 0° direction (P3(+Y)) (unit:%) at the measurement position P3(+Y) in the +Y direction as viewed from the winding center C1 illustrated in FIG. 8 are "angle of 75% (P3(+Y)) (unit:°) relative to the transmittance of angle 0°;
Angle θ1 and angle θ2 where the transmittance is 50% (a value of 1/2 (half value) of the transmittance of the incident angle 0°) with respect to the transmittance in the angle 0° direction (P3(+Y)) (unit:%) at the measurement position P3(+Y) in the +Y direction as viewed from the winding center C1 illustrated in FIG. 8 are "angle of 50% (P3(+Y)) (unit:°) relative to the transmittance of angle 0°;
Angle θ1 and angle θ2 where the transmittance is 25% with respect to the transmittance in the angle 0° direction (P3(+Y)) (unit:%) at the measurement position P3(+Y) in the +Y direction as viewed from the winding center C1 illustrated in FIG. 8 are "angle (P3(+Y)) of 25% (a value of 1/4 of the transmittance of the incident angle 0°) (unit:°) relative to the transmittance of angle 0°.

The evaluation results of embodiments 1 to 6 and comparative example 1 are shown in Table 2 below.

**[Table 2]**

| Sample name | | embodi ment 1 | embodi ment 2 | embodi ment 3 | embodi ment 4 | embodi ment 5 | embodi ment 6 | compara tive example 1 |
|---|---|---|---|---|---|---|---|---|
| evaluat ion results | L2/L1 | 2.9 | 2.7 | 3.7 | 2.7 | 2.4 | 3.0 | 2.8 |
| | ratio (%) of area of light blocking portion | 5.9 | 6.5 | 14.0 | 15.4 | 5.2 | 5.7 | 6.3 |
| | transmitt ance (%) in direction of angle 0° | 74 | 78 | 67 | 66 | 74 | 76 | 77 |
| | Angle _θ2/θ1( %) of 75% relative to transmitt ance in angle 0° direction | -15/9 | -21/14 | -12/8 | -17/12 | -5/10 | -4/9 | -8/8 |
| | Angle _θ2/θ1( %) of 50% relative to transmitt ance in angle 0° | -27/15 | -29/22 | -18/14 | -23/18 | -16/21 | -13/20 | -15/15 |
| | direction | | | | | | | |
| | Angle _θ2/θ1( %) of 25% relative to transmitt ance in angle 0° direction | -32/23 | -34/31 | -31/22 | -39/26 | -27/35 | -22/29 | -23/23 |
| Remarks | | The present inventio n | The present inventio n | The present inventio n | The present inventio n | The present inventio n | The present inventio n | compara tive product |

### [Evaluation results]

By comparing the louver films of embodiments 1 to 6 and comparative example 1, the following characteristics of the louver films of embodiments 1 to 6 were identified through the results of Table 2.

### 〈Comparison between embodiment 1 and comparative example 1〉

It was identified that the angle of θ1 in embodiment 1 and the angle of θ1 in comparative example 1 were almost equal for "an angle of 75% relative to transmittance", "an angle of 50% relative to transmittance", and "an angle of 25% relative to transmittance", and the angle of θ2 in embodiment 1 was wider than the angle of θ2 in comparative example 1 for "an angle of 75% relative to transmittance", "an angle of 50% relative to transmittance", and "an angle of 25% relative to transmittance".

### 〈Comparison between embodiment 2 and comparative example 1〉

It was identified that the angles of θ1 and θ2 in embodiment 1 were all wider than the angles of θ1 and θ2 in comparative example 1, and the angle difference of θ2 in embodiment 2 with respect to θ2 in comparative example 1 was larger than the angle difference of θ1 in embodiment 2 with respect to θ1 in comparative example 1 for all of "an angle of 75% relative to transmittance", "an angle of 50% relative to transmittance", and "an angle of 25% relative to transmittance".

### 〈Comparison between embodiment 3 and comparative example 1〉

It was identified that the angle of θ1 in embodiment 3 and the angle of θ1 in comparative example 1 were almost equal for "an angle of 75% relative to transmittance" and "an angle of 50% relative to transmittance", and the angle of θ2 in embodiment 3 was insignificantly wider than the angle of θ2 in comparative example 1. Further, it was identified that the angle of θ1 in embodiment 3 and the angle of θ1 in comparative example 1 were almost equal for the "angle of 25% relative to transmittance" in embodiment 3, whereas the angle of θ2 in embodiment 3 was wider than the angle of θ2 in comparative example 1.

### 〈Comparison between embodiment 4 and comparative example 1〉

It was identified that the angles of θ1 and θ2 in embodiment 4 were all wider than the angles of θ1 and θ2 in comparative example 1, and the angle difference of θ2 in embodiment 2 with respect to θ2 in comparative example 1 was larger than the angle difference of θ2 in embodiment 4 with respect to θ2 in comparative example 1 for all of "an angle of 75% relative to transmittance", "an angle of 50% relative to transmittance", and "an angle of 25% relative to transmittance".

### 〈Comparison between embodiment 5 and comparative example 1〉

It was identified that the angles of θ1 and θ2 in embodiment 5 were wider than θ1 and θ2 in comparative example 1 for all of "an angle of 50% relative to transmittance" and "an angle of 25% relative to transmittance". For "an angle of 50% relative to transmittance" and "an angle of 25% relative to transmittance", it was identified that the angle difference of θ1 in embodiment 5 with respect to θ1 in comparative example 1 was larger than the angle difference of θ2 in embodiment 5 with respect to θ2 in comparative example 1. Meanwhile, for the "angle of 75% relative to transmittance", it was identified that θ1 in embodiment 5 was insignificantly wider than θ1 in comparative example 1, and θ2 in embodiment 5 was insignificantly narrower than θ2 in comparative example 1.

### <Comparison between embodiment 6 and comparative example 1〉

It was identified that the angle of θ1 in embodiment 6 was wider than θ1 in comparative example 1 for "an angle of 75% relative to transmittance", "an angle of 50% relative to transmittance", and "an angle of 25% relative to transmittance". Meanwhile, it was identified that the angle of θ2 in embodiment 6 was narrower than θ2 in comparative example 1 for "an angle of 75% relative to transmittance", "an angle of 50% relative to transmittance", and "an angle of 25% relative to transmittance".

As described above, in all of the louver films in embodiments 1 to 6, among the refractive indices of the light transmitting layer, the light blocking layer, and the adhesive layer constituting the light transmitting portion or the light blocking portion included in the louver portion, the refractive index of at least one of the light blocking layer and the adhesive layer was different from the refractive index of the light transmitting layer. Accordingly, the louver films in embodiments 1 to 6 have different characteristics for angles of θ1 and θ2 in "an angle of 75% relative to transmittance", "an angle of 50% relative to transmittance", and "an angle of 25% relative to transmittance". Accordingly, it was identified that the louver films in embodiments 1 to 6 were sufficiently capable of controlling the viewing angle in a specific direction if the size relationship in refractive index between the light transmitting layer, the light blocking layer, and the adhesive layer constituting the louver portion was controlled. Accordingly, the louver films in embodiments 1 to 6 having the wound structure may be capable of controlling the viewing angle in a specific direction in the radiation direction from the winding center of the louver film by appropriately controlling the size relationship in refractive index between the light transmitting layer, the light blocking layer, and the adhesive layer.

On the other hand, in comparative example 1, the refractive indices of the light transmitting layer, the light blocking layer, and the adhesive layer constituting the light transmitting portion or the light blocking portion included in the louver portion are the same. Therefore, it was identified that the angles of θ1 and θ2 in "an angle of 75% relative to transmittance", "an angle of 50% relative to transmittance", and "an angle of 25% relative to transmittance" in comparative example 1 gradually increased as if they were proportional in the order thereof. Since the louver portion of the louver film in comparative example 1 has a wound structure, it is guessed that the angles of θ1 and θ2 has changed symmetrically with respect to the angle 0°. Further, when viewing angle control is performed in the configuration of the louver film in comparative example 1, the thicknesses (interlayer pitch) of the light transmitting layer, the light blocking layer, and the adhesive layer are changed. Since the louver portion has a wound structure, it seems difficult to control the viewing angle in a specific direction by changing the angles of θ1 and θ2 individually like the louver films in embodiments 1 to 6.

It is apparent to one of ordinary skill in the art that a louver film and a device including the film according to the disclosure are not limited to the above-described embodiments and those shown in the drawings, and various changes, modifications, or alterations may be made thereto without departing from the scope of the present invention.

While embodiments of the present invention have been described, it should be appreciated that an embodiment is intended as limiting the invention but as illustrative. It will be apparent to one of ordinary skill in the art that various changes may be made in form and detail without departing from the overall scope of the disclosure, including the appended claims and their equivalents.

## Claims

1. A louver film (100), comprising a louver portion (30) having a wound structure in a state in which a stack including a light transmitting layer, a light blocking layer, and an adhesive layer is wound,
wherein the louver portion includes a light transmitting portion (10) formed of, at least, the light transmitting layer and a light blocking portion (20) formed of, at least, the light blocking layer, and
wherein at least one of a refractive index of the light blocking layer or a refractive index of the adhesive layer is different from a refractive index of the light transmitting layer.

2. The louver film of claim 1, wherein the refractive index of the light blocking layer is smaller than the refractive index of the light transmitting layer and is larger than the refractive index of the adhesive layer.

3. The louver film of claim 1 or 2, wherein the refractive index of the adhesive layer is smaller than the refractive index of the light transmitting layer and is larger than the refractive index of the light blocking layer.

4. The louver film of any one of claims 1 to 3, wherein the refractive indices of the light blocking layer and the adhesive layer are identical or similar to each other, and are larger than the refractive index of the light transmitting layer.

5. The louver film of any one of claims 1 to 3, wherein the refractive indices of the light blocking layer and the adhesive layer are identical or similar to each other, and are smaller than the refractive index of the light transmitting layer.

6. The louver film of any one of claims 1 to 3, wherein the refractive indices of the light transmitting layer and the light blocking layer are identical or similar to each other, and are larger than the refractive index of the adhesive layer.

7. The louver film of any one of claims 1 to 3, wherein the refractive indices of the light transmitting layer and the light blocking layer are identical or similar to each other, and are smaller than the refractive index of the adhesive layer.

8. The louver film of any one of claims 1 to 7, wherein the light blocking layer is disposed adjacent to an outer circumference of the light transmitting layer, and the adhesive layer is disposed adjacent to an inner circumference of the light transmitting layer.

9. A device including the louver film of any one of claims 1 to 8.
